# EUROPEAN PATENT APPLICATION

(11) **EP 4 213 576 A1**
(43) Date of publication of application: **19.07.2023**
(21) Application number: 21885230.9
(22) Date of filing: 27.10.2021
(51) Int. Cl.: H04W 76/10

(54) **METHOD, APPARATUS, AND SYSTEM FOR ALLOWING APPLICATION TO ACCESS NETWORK**

(30) Priority: 31.10.2020 CN 202011197417
(71) Applicant: Huawei Technologies Co., Ltd., Shenzhen, Guangdong 518129 (CN)
(72) Inventor: HU, Xiang, Shenzhen, Guangdong 518129 (CN); XIA, Yuan, Shenzhen, Guangdong 518129 (CN)
(74) Representative: Pfenning, Meinig & Partner mbB
(86) International application number: PCT/CN2021/126843
(87) International publication number: WO 2022/089503

(57) **Abstract**

Embodiments of this application provide a method for an application to access a network, an apparatus, and a system, to incorporate an application into mobile communication network planning to improve flexibility of data exchange between the application and a mobile communication network. The method includes: A session management function entity receives a first message from an application instance access module, where the first message is used to request to establish a first connection for a first application instance; the session management function entity determines a first user plane function entity serving the first application instance; the session management function entity sends a second message to the first user plane function entity, where the second message includes identification information of the first application instance; the session management function entity receives a third message from the first user plane function entity, where the third message includes an establishment result of the first connection; and when the establishment result is a success, the session management function entity sends a fourth message to the application instance access module, where the fourth message includes a first address allocated by a core network element to the first connection.

## Description

This application claims priority to Chinese Patent Application No. 202011197417.3, filed with the China National Intellectual Property Administration on October 31, 2020 and entitled "METHOD FOR APPLICATION TO ACCESS NETWORK, APPARATUS, AND SYSTEM", which is incorporated herein by reference in its entirety.

### TECHNICAL FIELD

This application relates to the field of communications technologies, and in particular, to a method for an application to access a network, an apparatus, and a system.

### BACKGROUND

Currently, the 3rd generation partnership project (3rd generation partnership project, 3GPP) working group is responsible for formulating a standard architecture for a mobile communication network. However, in a scenario in which a terminal device accesses an application by using the mobile communication network, the application usually belongs to a system different from that of the mobile communication network.

For example, in mobile edge computing (mobile edge computing, MEC), an Internet technology (Internet technology, IT) and a cloud computing capability are deployed in a radio access network (radio access network, RAN) device located at a network edge to obtain network information in real time, for example, user location information and cell load information. The network information is used by various application instances to provide a content-based service and provide differentiated user experience of a mobile broadband. However, MEC is managed by the European Telecommunications Standards Institute (European Telecommunications Standards Institute, ETSI). In an MEC standard architecture, a specific interface and a deployment solution are required to implement data exchange and management between the mobile communication network and an application. Alternatively, for example, in a current 3GPP standard, capability exposure for an application is specially described, and a network exposure function (network exposure function, NEF) is further added to implement capability exposure for an application function (application function, AF). For example, the AF may affect traffic routing by using the NEF. However, in this architecture, a user plane path forwarding policy and service policy that are used by the terminal device to access an application needs to be affected through capability exposure for the application.

In conclusion, currently, data exchange between the application and the mobile communication network is not flexible enough.

### SUMMARY

Embodiments of this application provide a method for an application to access a network, an apparatus, and a system, to incorporate an application into mobile communication network planning to improve flexibility of data exchange between the application and a mobile communication network.

To achieve the foregoing objective, the following technical solutions are used in the embodiments of this application.

According to a first aspect, a method for an application to access a network is provided. A communication apparatus that performs the power control method may be a session management function entity, or may be a module applied to the session management function entity, for example, a chip or a chip system. The following is described by using an example in which an execution body is the session management function entity. The session management function entity receives a first message from an application instance access module, where the first message includes identification information of a first application instance, and the first message is used to request to establish a first connection for the first application instance between the first application instance and a mobile communication network. The session management function entity determines a first user plane function entity serving the first application instance. The session management function entity sends a second message to the first user plane function entity, where the second message includes the identification information of the first application instance, and the second message is used to request to establish the first connection for the first application instance. The session management function entity receives a third message from the first user plane function entity, where the third message includes an establishment result of the first connection, and the establishment result includes a success. The session management function entity sends a fourth message to the application instance access module, where the fourth message includes a first address allocated by a core network element to the first connection. In this embodiment of this application, the session management function entity and the first user plane function entity in the mobile communication network establish the first connection for the first application instance between the first application instance and the mobile communication network, and the core network element allocates the first address to the first connection in the process of establishing the first connection. It can be learned that address allocation and management and a data plane forwarding path that correspond to the first application instance all fall within a control range of the mobile communication network. In other words, in this solution, the first application instance may access the mobile communication network as a special terminal device. Because the first application instance is a specific running instance of an application, based on this solution, flexibility of data exchange between the application and the mobile communication network can be improved.

With reference to the first aspect, in a possible implementation, the first address is used by a terminal device to perform data communication with the first application instance. For example, the terminal device may access the first application instance by using the first address. Based on this solution, a self-organizing network that can implement plug-and-play of an application service can be formed between the terminal device and the first application instance, to implement mutual data access between the terminal device and an application server in which the first application instance is located.

With reference to the first aspect, in a possible implementation, the first message and the second message further include first path information allocated by the application instance access module to the first connection, and the third message and the fourth message further include second path information allocated by the first user plane function entity to the first connection. The first path information and the second path information are used to establish a first path that is in the first connection and that is between the first user plane function entity and the application instance access module. Based on this solution, data can be transmitted between the first user plane function entity and the application instance access module by using the first path.

With reference to the first aspect, in a possible implementation, the core network element is the first user plane function entity, and the third message further includes the first address. In other words, in this embodiment of this application, the first user plane function entity allocates the first address to the first connection.

With reference to the first aspect, in a possible implementation, the core network element is the session management function entity. In other words, in this embodiment of this application, the session management function entity allocates the first address to the first connection.

With reference to the first aspect, in a possible implementation, the second message further includes the first address, and the first address is used by the first user plane function entity to advertise a route. Based on this solution, subsequently, another network element or entity may directly find the first user plane function entity through addressing based on the route advertised by the first user plane function entity.

With reference to the first aspect, in a possible implementation, the first message further includes a first parameter, and the first parameter is used to determine the first user plane function entity serving the first application instance, or the first parameter is used to construct a virtual local area network including the first user plane function entity. For example, the first parameter includes at least one of the following parameters: location information and a session and service continuity SSC mode that are of the first application instance, a data network name DNN corresponding to the first connection, or identification information of a network slice in which the first connection is located.

With reference to the first aspect, in a possible implementation, the first message further includes application information corresponding to the first application instance, and the application information is used to construct a virtual local area network including the first user plane function entity. For example, the application information may include, an application name, an application identifier, or application domain name information.

With reference to the first aspect, in a possible implementation, the first message includes the first parameter and the application information corresponding to the first application instance, and the first parameter and the application information corresponding to the first application instance are used to construct a virtual local area network including the first user plane function entity.

With reference to the first aspect, in a possible implementation, the method further includes: The session management function entity sends a fifth message to a unified data management function entity, where the fifth message includes the identification information of the first application instance, and the fifth message is used to request to obtain subscription data of the first application instance; and the session management function entity receives the subscription data from the unified data management function entity, where the subscription data is used to determine the first user plane function entity serving the first application instance, or the subscription data is used to construct a virtual local area network including the first user plane function entity.

It can be understood that in this embodiment of this application, a parameter for determining the first user plane function entity serving the first application instance includes at least one of the first parameter or the subscription data. A parameter used to construct the virtual local area network including the first user plane function entity includes at least one of the first parameter, the application information corresponding to the first application instance, or the subscription data.

With reference to the first aspect, in a possible implementation, the method further includes: The session management function entity registers, with a network repository function entity, a function in which the session management function entity supports establishment of a connection for an application instance. Based on this solution, when a session management function entity is subsequently selected, a session management function entity that supports establishment of a connection for an application instance may be obtained from the network repository function entity.

According to a second aspect, a method for an application to access a network is provided. A communication apparatus that performs the power control method may be an application instance access module; may be a module applied to the application instance access module, for example, a chip or a chip system; or may be an apparatus including the application instance access module, for example, a first application instance, an application server, or an application integration platform. The following is described by using an example in which an execution body is the application instance access module. The application instance access module determines a session management function entity serving a first application instance. The application instance access module sends a first message to the session management function entity, where the first message includes identification information of the first application instance, and the first message is used to request to establish a first connection for the first application instance between the first application instance and a mobile communication network. The application instance access module receives a fourth message from the session management function entity, where the fourth message includes a first address allocated by a core network element to the first connection. In this embodiment of this application, the session management function entity and a first user plane function entity in the mobile communication network establish the first connection for the first application instance between the first application instance and the mobile communication network, and the core network element allocates the first address to the first connection in the process of establishing the first connection. It can be learned that address allocation and management and a data plane forwarding path that correspond to the first application instance all fall within a control range of the mobile communication network. In other words, in this solution, the first application instance may access the mobile communication network as a special terminal device. Because the first application instance is a specific running instance of an application, based on this solution, flexibility of data exchange between the application and the mobile communication network can be improved.

With reference to the second aspect, in a possible implementation, the first address is used by a terminal device to perform data communication with the first application instance. For example, the terminal device may access the first application instance by using the first address. Based on this solution, a self-organizing network that can implement plug-and-play of an application service can be formed between the terminal device and the first application instance, to implement mutual data access between the terminal device and an application server in which the first application instance is located.

With reference to the second aspect, in a possible implementation, the first message further includes first path information allocated by the application instance access module to the first connection, and the fourth message further includes second path information allocated by the first user plane function entity to the first connection. The first path information and the second path information are used to establish a first path between the first user plane function entity and the application instance access module, and the first user plane function entity is a user plane function entity serving the first application instance. Based on this solution, data can be transmitted between the first user plane function entity and the application instance access module by using the first path. For example, in a possible implementation, the method further includes: After obtaining first data from the first application instance, the application instance access module sends the first data to the first user plane function entity by using the first path; or the application instance access module receives second data from the first user plane function entity by using the first path.

With reference to the second aspect, in a possible implementation, the method further includes: The application instance access module advertises a route based on the first address. Based on this solution, subsequently, another network element or entity may directly find the application instance access module through addressing based on the route advertised by the application instance access module. For example, in a possible implementation, the method further includes: The application instance access module receives second data from a second user plane function entity, where the second user plane function entity finds the application instance access module through addressing based on the route advertised by the application instance access module.

With reference to the second aspect, in a possible implementation, before the application instance access module sends the first message to the session management function entity, the method further includes: The application instance access module receives a sixth message from the first application instance, where the sixth message includes application information corresponding to the first application instance and is used to request to register with the application instance access module. After the application instance access module receives the fourth message from the session management function entity, the method further includes: The application instance access module sends the first address to the first application instance.

With reference to the second aspect, in a possible implementation, the core network element is the session management function entity, or the core network element is the first user plane function entity serving the first application instance.

With reference to the second aspect, in a possible implementation, the first message further includes a first parameter, and the first parameter is used to determine the first user plane function entity serving the first application instance, or the first parameter is used to construct a virtual local area network including the first user plane function entity. For example, the first parameter includes at least one of the following parameters: location information and a session and service continuity SSC mode that are of the first application instance, a data network name DNN corresponding to the first connection, or identification information of a network slice in which the first connection is located.

With reference to the second aspect, in a possible implementation, the first message further includes the application information corresponding to the first application instance, and the application information is used to construct a virtual local area network including the first user plane function entity. For example, the application information may include, an application name, an application identifier, or application domain name information.

With reference to the second aspect, in a possible implementation, the first message includes the first parameter and the application information corresponding to the first application instance, the first parameter and the application information corresponding to the first application instance are used to construct a virtual local area network including the first user plane function entity, and the first user plane function entity is a user plane function entity serving the first application instance.

With reference to the second aspect, in a possible implementation, that the application instance access module determines a session management function entity serving a first application instance includes: The application instance access module obtains, from a network repository function entity, information about one or more session management function entities that support establishment of a connection for an application instance; and the application instance access module determines, based on the information about the one or more session management function entities, the session management function entity serving the first application instance. In other words, in this embodiment of this application, the application instance access module may interact with the network repository function entity to determine the session management function entity serving the first application instance.

According to a third aspect, a method for an application to access a network is provided. A communication apparatus that performs the power control method may be a first user plane function entity, or may be a module applied to the first user plane function entity, for example, a chip or a chip system. The following is described by using an example in which an execution body is the first user plane function entity. The first user plane function entity receives a second message from a session management function entity, where the second message includes identification information of a first application instance, the second message is used to request to establish a first connection for the first application instance between the first application instance and a mobile communication network, and the first user plane function entity is a user plane function entity serving the first application instance. The first user plane function entity sends a third message to the session management function entity, where the third message includes an establishment result of the first connection, and the establishment result includes a success or a failure. In this embodiment of this application, the session management function entity and the first user plane function entity in the mobile communication network establish the first connection for the first application instance between the first application instance and the mobile communication network, and a core network element allocates a first address to the first connection in the process of establishing the first connection. It can be learned that address allocation and management and a data plane forwarding path that correspond to the first application instance all fall within a control range of the mobile communication network. In other words, in this solution, the first application instance may access the mobile communication network as a special terminal device. Because the first application instance is a specific running instance of an application, based on this solution, flexibility of data exchange between the application and the mobile communication network can be improved.

With reference to the third aspect, in a possible implementation, the second message further includes first path information allocated by an application instance access module to the first connection, and the third message further includes second path information allocated by the first user plane function entity to the first connection. The first path information and the second path information are used to establish a first path that is in the first connection and that is between the first user plane function entity and the application instance access module. Based on this solution, data can be transmitted between the first user plane function entity and the application instance access module by using the first path.

With reference to the third aspect, in a possible implementation, the third message further includes the first address allocated by the first user plane function entity to the first connection. In other words, in this embodiment of this application, the first user plane function entity allocates the first address to the first connection.

With reference to the third aspect, in a possible implementation, the second message further includes the first address allocated by the session management function entity to the first connection. In other words, in this embodiment of this application, the session management function entity allocates the first address to the first connection.

With reference to the third aspect, in a possible implementation, the first address is used by a terminal device to perform data communication with the first application instance. For example, the terminal device may access the first application instance by using the first address. Based on this solution, a self-organizing network that can implement plug-and-play of an application service can be formed between the terminal device and the first application instance, to implement mutual data access between the terminal device and an application server in which the first application instance is located.

With reference to the third aspect, in a possible implementation, the method further includes: The first user plane function entity advertises a route based on the first address. Based on this solution, subsequently, another network element or entity may directly find the first user plane function entity through addressing based on the route advertised by the first user plane function entity. For example, in a possible implementation, the method further includes: The first user plane function entity receives second data from a second user plane function entity, and sends the second data to the first application instance by using the application instance access module, where the second user plane function entity finds the first user plane function entity through addressing based on the route advertised by the first user plane function entity. In a possible implementation, the second user plane function entity is a user plane function entity serving a terminal device, and the terminal device may access the first application instance by using the first address. Based on this solution, data can be transmitted from the terminal device to the first application instance.

With reference to the third aspect, in a possible implementation, the method further includes: The first user plane function entity registers, with a network repository function entity, a function in which the first user plane function entity supports establishment of a connection for an application instance. Based on this solution, when a user plane function entity is subsequently selected, a user plane function entity that supports establishment of a connection for an application instance may be obtained from the network repository function entity.

With reference to the third aspect, in a possible implementation, the method further includes: The first user plane function entity receives first data from the first application instance by using the application instance access module; and the first user plane function entity sends the first data to a second user plane function entity, where the second user plane function entity is a user plane function entity serving a terminal device. The terminal device may access the first application instance by using the first address. Based on this solution, data can be transmitted from the first application instance to the terminal device.

According to a fourth aspect, a communication apparatus is provided, to implement the foregoing method. The communication apparatus includes a corresponding module, unit, or means (means) for implementing the foregoing method. The module, the unit, or the means may be implemented by hardware or software, or implemented by executing corresponding software by using hardware. The hardware or the software includes one or more modules or units corresponding to the foregoing functions.

According to a fifth aspect, a communication apparatus is provided, including a processor. The processor is configured to be coupled to a memory, read computer instructions stored in the memory, and then perform the method according to any one of the foregoing aspects based on the instructions.

With reference to the fifth aspect, in a possible implementation, the communication apparatus further includes a memory, and the memory is configured to store the computer instructions.

With reference to the fifth aspect, in a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

With reference to the fifth aspect, in a possible implementation, the communication apparatus may be a chip or a chip system. When the communication apparatus is a chip system, the communication apparatus may include a chip, or may include a chip and another discrete device.

With reference to the fifth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product is run on a computer, the computer is enabled to perform the method according to any one of the foregoing aspects.

For technical effects brought by any possible implementation in the fourth aspect to the seventh aspect, refer to technical effects brought by different implementations in the first aspect, the second aspect, or the third aspect. Details are not described herein again.

According to an eighth aspect, a communication system is provided. The communication system includes the session management function entity according to the first aspect and the first user plane function entity according to the third aspect.

With reference to the eighth aspect, in a possible implementation, the communication system further includes the application instance access module according to the second aspect.

### BRIEF DESCRIPTION OF DRAWINGS

FIG. 1 is a schematic diagram of an existing 3GPP ULCL architecture;
FIG. 2 is a schematic diagram of an existing 3GPP BP architecture;
FIG. 3 is a brief schematic diagram of an MEC standard architecture currently defined by ETSI;
FIG. 4 is a schematic diagram of a form in which a local (local) APP is deployed in an existing MEC solution;
FIG. 5 is a schematic diagram of a user plane architecture of an existing 5GVN service;
FIG. 6 is a schematic diagram of an existing user plane protocol stack forwarded based on an N19 tunnel;
FIG. 7 is a schematic diagram of an architecture of a communication system according to an embodiment of this application;
FIG. 8 is a first schematic diagram of deployment of an application instance access module according to an embodiment of this application;
FIG. 9 is a second schematic diagram of deployment of an application instance access module according to an embodiment of this application;
FIG. 10 is a schematic diagram of application of a communication system in a 5G network according to an embodiment of this application;
FIG. 11 is a schematic diagram of a structure of a communication apparatus according to an embodiment of this application;
FIG. 12 is a first schematic diagram of interaction in a method for an application to access a network according to an embodiment of this application;
FIG. 13A to FIG. 13C are a second schematic diagram of interaction in a method for an application to access a network according to an embodiment of this application;
FIG. 14A to FIG. 14C are a third schematic diagram of interaction in a method for an application to access a network according to an embodiment of this application; and
FIG. 15 is a schematic diagram of a structure of a communication apparatus according to an embodiment of this application.

### DESCRIPTION OF EMBODIMENTS

To facilitate understanding of technical solutions in embodiments of this application, technologies related to this application are first briefly described below.

First, an application (application, APP) and an APP instance are described.

The APP in the embodiments of this application is a type of provided application service, for example, a type of application service that provides an Internet service. For example, the APP may be, Taobao, which is used to provide an Internet service for online shopping. Alternatively, the APP may be, for example, Tencent Video, which is used to provide an Internet service for online video watching, and so on.

The APP instance in the embodiments of this application is an instance that runs the APP. For example, when the APP is Taobao, a corresponding APP instance is an instance running Taobao; or when the APP is Tencent Video, a corresponding APP instance is an instance running Tencent Video.

In the embodiments of this application, a plurality of APP instances may be deployed for each APP to jointly provide a service, that is, one APP may correspond to a plurality of APP instances. The APP instance usually runs in an application server. This is uniformly described herein, and details are not described below again.

Second, an anchor user plane function (user plane function, UPF) and an intermediate UPF (intermediate UPF, I-UPF) are described.

In the embodiments of this application, the anchor UPF may be a protocol data unit (protocol data unit, PDU) session anchor (PDU session anchor, PSA)-UPF. In a moving process of a terminal device, the anchor UPF of an entire session remains unchanged, and the anchor UPF is responsible for advertising a downlink routing policy of an Internet Protocol (Internet protocol, IP) of the terminal device. All packets sent to the terminal device are forwarded to the anchor UPF based on the downlink routing policy, to be processed.

In a possible implementation, the I-UPF is located between a RAN device and the anchor UPF, and is continuously switched as the terminal device moves.

Third, a 3GPP uplink-classifier (uplink-classifier, ULCL) architecture and a 3GPP branching point (branching point) architecture are described.

To enable an application to select a deployment location more flexibly, and prevent a service traffic deployed at an edge from detouring due to an excessively high location of a core network, when 3GPP formulates a user plane service for a 5th generation (5th generation, 5G) core network, a user plane ULCL/BP function that is not supported by a 4th generation (4th generation, 4G) evolved packet core (evolved packet core, EPC) is newly added.

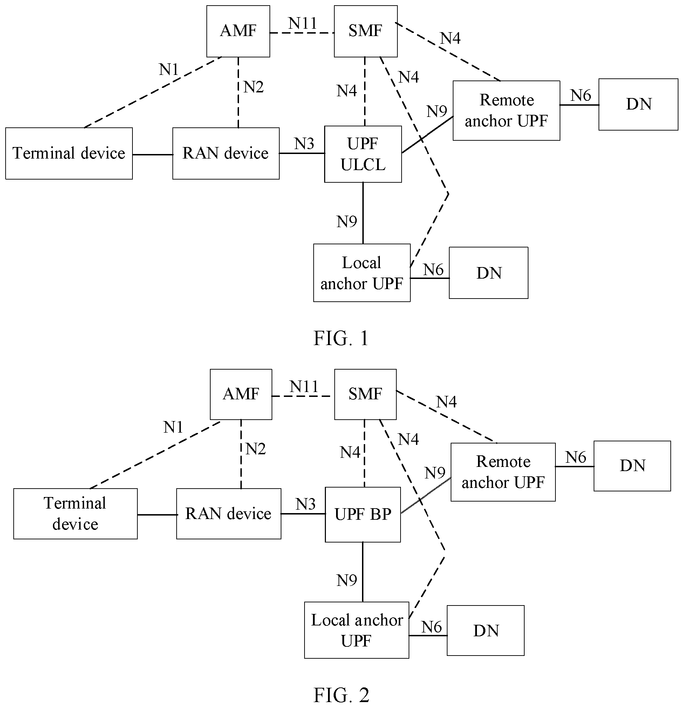

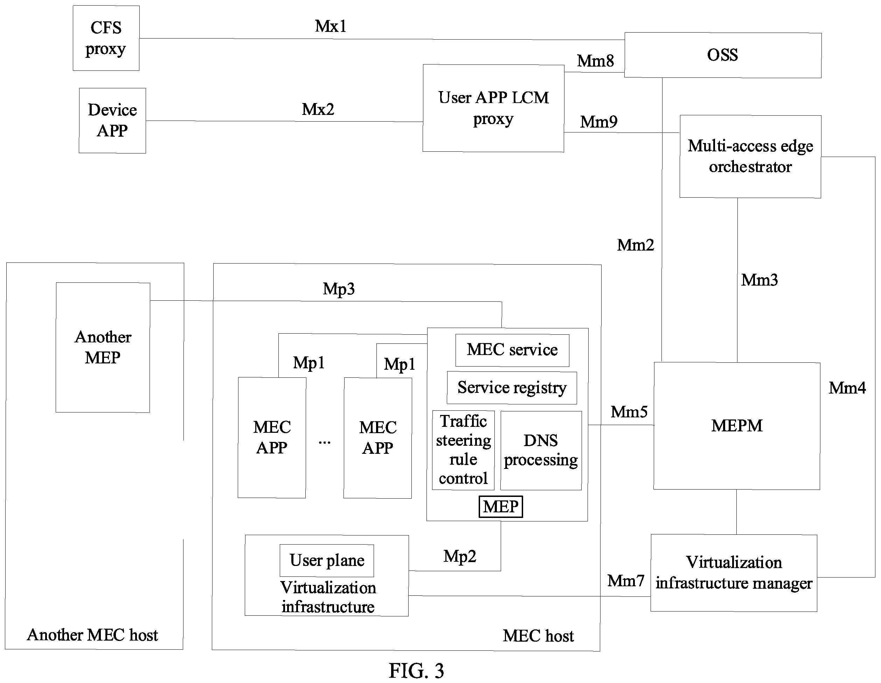

FIG. 1 is a schematic diagram of an existing 3 GPP ULCL architecture. As shown in FIG. 1, 3 GPP defines the 3GPP ULCL architecture as follows: A new UPF ULCL may be inserted between a RAN device and an anchor UPF of a PDU session. As defined by the name of the UPF ULCL, the ULCL functions as an uplink classifier for a data flow. To be specific, based on identification of an uplink feature of a service flow, data is offloaded to a local data network (data network, DN) by using a local anchor UPF, or data is offloaded to a remote DN by using a remote anchor UPF. In addition, the UPF ULCL further needs to aggregate downlink flows. The local DN is a DN the same as the remote DN.

It should be noted that the UPF ULCL and the local anchor UPF in FIG. 1 may be deployed together or may be deployed separately. This is not specifically limited herein. In addition, an access and mobility management function (core access and mobility management function, AMF) in FIG. 1 is used for mobility management in a mobile network, for example, user location update, network registration of a user, or user switching. A session management function (session management function, SMF) in FIG. 1 is used for session management in a mobile network, for example, session establishment, modification, or release. This is uniformly described herein, and details are not described below again.

FIG. 2 is a schematic diagram of an existing 3GPP BP architecture. The 3GPP BP architecture is similar to the 3GPP ULCL architecture, and a difference lies in, for example, that the UPF ULCL in FIG. 1 is replaced with a UPF BP. A function of the UPF BP is the same as that of the UPF ULCL, except that the UPF BP is a traffic steering point insertion for an Internet Protocol version 6 (Internet protocol version 6, IPv6), and the UPF ULCL is a session for an Internet Protocol version 4 (Internet protocol version 4, IPv4) or non-multi-homed (IPv6 multi-homed, that is, a single session is allowed to have a plurality of addresses) scenario. There is a difference between IPv6 and IPv4 in terms of user plane. For a PDU session of an IPv4 or IPv6 type, a PDU session anchor may be an IP anchor of an IP address/prefix allocated to a terminal device. For a PDU session of an IPv4 type or a non-multi-homed PDU session of IPv6, when a plurality of PDU session anchors are used (because the UPF ULCL is inserted), only one PDU session anchor is the IP anchor. However, for a multi-homed PDU session of IPv6, there may be a plurality of IP anchors.

Third, an MEC standard architecture is described.

FIG. 3 is a brief schematic diagram of an MEC standard architecture currently defined by ETSI. As shown in FIG. 3, the MEC standard architecture includes an MEC system level (MEC system level) and an MEC host level (MEC host level).

The MEC system level includes an operation support system (operation support system, OSS) and a multi-access edge orchestrator (multi-access edge orchestrator).

The MEC host level includes an MEC platform manager (MEC platform Manager, MEPM), a virtualization infrastructure manager (virtualization infrastructure manager), and one or more MEC hosts. The MEC host includes an MEC platform (MEC platform, MEP), a virtualization infrastructure (virtualization infrastructure), and a plurality of MEC APPs.

Specifically, the MEPM performs life cycle management of the MEC APP, rule and request management of the MEC APP, and MEC platform element management through an Mm5 interface. The MEP is configured to run an MEC service (MEC service), perform service registry (service registry), traffic steering rule control (traffic rules control), domain name system (domain name system, DNS) processing, and the like. The MEP has an AF function in a 5G network, and the AF function in the MEP can be implemented by the MEC APP. The MEP communicates with the MEC APP through an Mp1 interface to manage the MEC APP. The MEC APP runs a specific service. A device APP can access the MEC APP in the MEC host by using a network. In addition, the MEP communicates with a user plane (data plane) in the virtualization infrastructure through an Mp2 interface. The data plan may be implemented by using a UPF. Therefore, the Mp2 interface may also be understood as an interface between the MEP and the UPF. It should be noted that the UPF in the MEC host is a UPF deployed at an edge location.

In addition, as shown in FIG. 3, a customer facing service (customer facing service, CFS) portal (portal) is connected to the OSS through an Mx1 interface. The device APP (device APP) is connected to a user APP life cycle management (life cycle management, LCM) proxy (user APP LCM proxy) through an Mx2 interface. The user APP LCM proxy is respectively connected to the OSS and the multi-access edge orchestrator through an Mm8 interface and an Mm9 interface. The OSS is connected to the multi-access edge orchestrator through an Mm1 interface, and the OSS is further connected to the MEPM through an Mm2 interface. The multi-access edge orchestrator is connected to the MEPM through an Mm3 interface, and the multi-access edge orchestrator is further connected to the virtualization infrastructure through an Mm4 interface. The virtualization infrastructure is connected to the MEPM through the Mm4 interface. The virtualization infrastructure in the MEC host is connected to the virtualization infrastructure manager through an Mp7 interface. MEPs of two MEC hosts communicate with each other through an Mp3 interface. It should be noted that the device APP herein is an APP installed on a terminal device (or referred to as user equipment (user equipment, UE)). This is uniformly described herein, and details are not described below again.

It can be learned from the foregoing description of the MEC standard architecture that in the embodiments of this application, the MEC APP needs to communicate with the virtualization infrastructure in a mobile communication network by using the MEC platform. In other words, in the MEC standard architecture, a specific interface and deployment solution are required to implement data exchange and management between the mobile communication network and an application. It is clear that in this solution, data exchange between the application and the mobile communication network is not flexible enough.

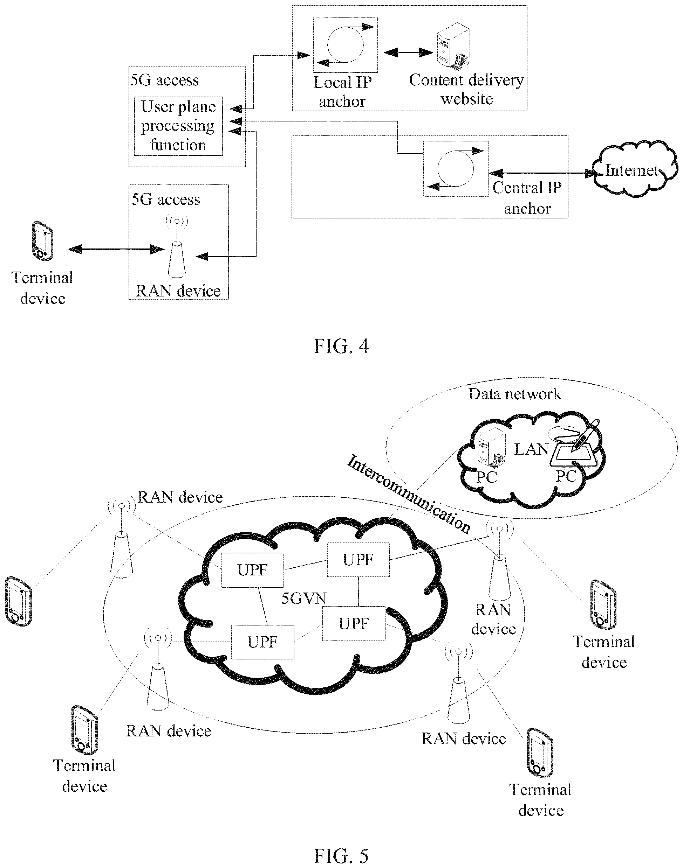

FIG. 4 is a schematic diagram of a form in which a local (local) APP is deployed in an existing MEC solution. As shown in FIG. 4, a terminal device accesses a user plane processing function in a 5G network by using a RAN device in the 5G network. In one aspect, the user plane processing function may be connected to a content delivery website by using a local IP anchor. In another aspect, the user plane processing function may be connected to the Internet by using a central IP anchor. The user plane processing function in FIG. 4 may correspond to the UPF ULCL in FIG. 1 or the UPF BP in FIG. 2. The local IP anchor in FIG. 4 may correspond to the local anchor UPF in FIG. 1 or FIG. 2. The central IP anchor in FIG. 4 may correspond to the remote anchor UPF in FIG. 1 or FIG. 2. The content delivery website in FIG. 4 may correspond to the DN connected to the local anchor UPF in FIG. 1 or FIG. 2. The Internet in FIG. 4 may correspond to the DN connected to the remote anchor UPF in FIG. 1 or FIG. 2. In addition, the user plane processing function in FIG. 4 may be deployed in the virtualization infrastructure in FIG. 3, and the content delivery website in FIG. 4 may be deployed in the MEC APP in FIG. 3. It can be understood that the connection between the terminal device and the user plane processing function is a wireless connection, and the connection between the user plane processing function and the content delivery website or the Internet is a wired connection.

Fourth, a 5G virtual network (5G virtual network, 5GVN) is described.

In terms of expression, the SGVN may also be referred to as a 5G local area network (local area network, 5GLAN), a LAN, a LAN-type service (type service), a LAN-VN, a 5GLAN-type service, a 5GLAN-VN, a 5GLAN group (group), a LAN group, or the like. This is not specifically limited in the embodiments of this application.

A 5GVN service is a service provided by a current 5G network, which is mainly applied to home communication, enterprise office, manufacturing in a factory, the Internet of Vehicles, power grid reconstruction, a public security agency, and the like. The service can provide private communication (that is, point-to-point data transmission) of an Internet Protocol (Internet protocol, IP) type or a non-IP type (such as an Ethernet type) for two or more terminal devices in a group of terminal devices. For example, devices in a factory form a SGVN group, and different devices may send an Ethernet data packet to each other. Alternatively, office devices (such as mobile phones, computers, or notebook computers) of employees in a department of an enterprise form a SGVN group, and different office devices may send an IP data packet to each other. If two terminal devices are not in a same SGVN group, the two terminal devices cannot communicate with each other.

FIG. 5 is a schematic diagram of a user plane architecture of an existing 5GVN service. A terminal device establishes a session to a UPF that provides a SGVN service, to access the UPF that provides the 5GVN service. As shown in FIG. 5, the UPF that provides the SGVN service may communicate with an existing LAN in a data network (data network, DN) through N6, for example, communicate with a personal computer (personal computer, PC) in the LAN. Alternatively, the UPF that provides the SGVN service may associate sessions of different terminal devices by using a connection between internal UPFs, to implement private communication. This is not specifically limited in the embodiments of this application. In the embodiments of this application, an interface between UPFs that provide the SGVN service is referred to as a next generation network (next generation, N) 19 interface (N19 for short), and a path between the UPFs that provide the SGVN service is referred to as an N19 tunnel. This is uniformly described herein, and details are not described below again. Certainly, the interface between the UPFs that provide the SGVN service may alternatively have another name. This is not specifically limited in the embodiments of this application.

For example, the N19 tunnel in the embodiments of this application may be constructed in a manner of a general packet radio service (general packet radio service, GPRS) tunneling protocol-user plane (GPRS tunneling protocol-user plane, GTP-U). The construction manner may be dynamic, or may be pre-configured in a network. This is not specifically limited in the embodiments of this application. In addition, in the embodiments of this application, when the N19 tunnel is constructed in the GTP-U manner, corresponding N19 tunnel information may be a UPF ID, a UPF ID+tunnel endpoint identifier (tunnel endpoint identifier, TEID), an IP address+TEID, an IP address+port (port) number+TEID, or the like. This is not specifically limited in the embodiments of this application.

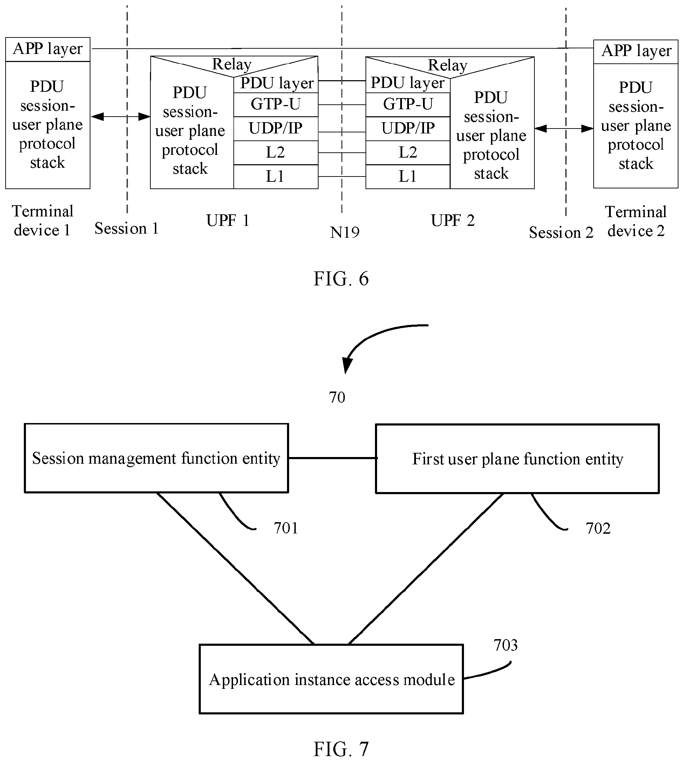

FIG. 6 is a schematic diagram of an existing user plane protocol stack forwarded based on an N19 tunnel. For example, a terminal device 1 and a terminal device 2 that belong to a same SGVN communicate with each other. In this case, before data is exchanged between the terminal device 1 and the terminal device 2, a session 1 needs to be established for the terminal device 1, and a session 2 needs to be established for the terminal device 2. Assuming that an anchor UPF corresponding to the session 1 is a UPF 1 and an anchor UPF corresponding to the session 2 is a UPF 2, subsequently, the terminal device 1 and the terminal device 2 may exchange data by using an N19 tunnel between the UPF 1 and the UPF 2. Specifically, as shown in FIG. 6, a 3GPP network protocol stack between a terminal device and a UPF (for example, between the terminal device 1 and the UPF 1 or between the terminal device 2 and the UPF 2) includes a PDU session-user plane protocol stack. An application (application, APP) layer is above PDU session-plane protocol stacks of the terminal device 1 and the terminal device 2. A 3GPP network protocol stack between the UPF 1 and the UPF 2 includes a PDU layer, a GTP-U layer, and lower-layer protocol layers. The lower-layer protocol layers include a user datagram protocol (user datagram protocol, UDP) layer/IP layer, a layer 2 (level 2, L2), and an L 1. In addition, in the embodiments of this application, for a service packet, the UPF does not perceive the APP layer. Therefore, as shown in FIG. 6, the APP layer corresponds to a relay (relay) on a UPF side. This is uniformly described herein, and details are not described below again.

It should be noted that the N19 tunnel in the embodiments of this application is a tunnel between UPFs in a 5GVN. This is uniformly described herein, and details are not described below again.

The following describes the technical solutions in embodiments of this application with reference to the accompanying drawings in embodiments of this application. In the descriptions of this application, unless otherwise specified, "/" represents an "or" relationship between associated objects. For example, A/B may represent A or B. In this application, "and/or" is merely an association relationship for describing associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, or c may indicate the following: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent giving an example, an illustration, or a description. Any embodiment or design solution described as "example" or "for example" in embodiments of this application should not be explained as being more preferred or having more advantages than another embodiment or design solution. Exactly, use of the words such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

FIG. 7 shows a communication system 70 according to an embodiment of this application. The communication system 70 includes a session management function entity 701 and a first user plane function entity 702. In a possible implementation, the communication system 70 further includes an application instance access module 703. Any two of the session management function entity 701, the first user plane function entity 702, and the application instance access module 703 may directly communicate with each other, or may communicate with each other through forwarding by another device. This is not specifically limited in this embodiment of this application.

The session management function entity 701 is configured to receive a first message from the application instance access module 703, where the first message includes identification information of a first application instance, and the first message is used to request to establish a first connection for the first application instance. The session management function entity 701 is further configured to send a second message to the first user plane function entity 702 after determining the first user plane function entity 702 serving the first application instance, where the second message includes the identification information of the first application instance, and the second message is used to request to establish the first connection for the first application instance. The first user plane function entity 702 is configured to receive the second message from the session management function entity 701, and send a third message to the session management function entity 701, where the third message includes an establishment result of the first connection, and the establishment result includes a success. The session management function entity 701 is configured to receive the third message from the first user plane function entity 702, and send a fourth message to the application instance access module 703, where the fourth message includes a first address allocated by a core network element to the first connection. Specific implementation of the foregoing solution is described in detail in subsequent method embodiments, and details are not described herein. In this embodiment of this application, the session management function entity and the first user plane function entity in a mobile communication network establish the first connection for the first application instance between the first application instance and the mobile communication network, and the core network element allocates the first address to the first connection in the process of establishing the first connection. It can be learned that address allocation and management and a data plane forwarding path that correspond to the first application instance all fall within a control range of the mobile communication network. In other words, in this solution, the first application instance may access the mobile communication network as a special terminal device. Because the first application instance is a specific running instance of an application, based on this solution, flexibility of data exchange between the application and the mobile communication network can be improved. Further, based on this solution, an application may be incorporated into mobile communication network planning to implement plug-and-play of the application in a mobile communication system, to dynamically orchestrate an application service and find an optimal path. This helps implement a new business deployment and cooperation mode between an operator and an application service provider.

In this embodiment of this application, the application instance access module 703 is configured to assist the first application instance in accessing the mobile communication network.

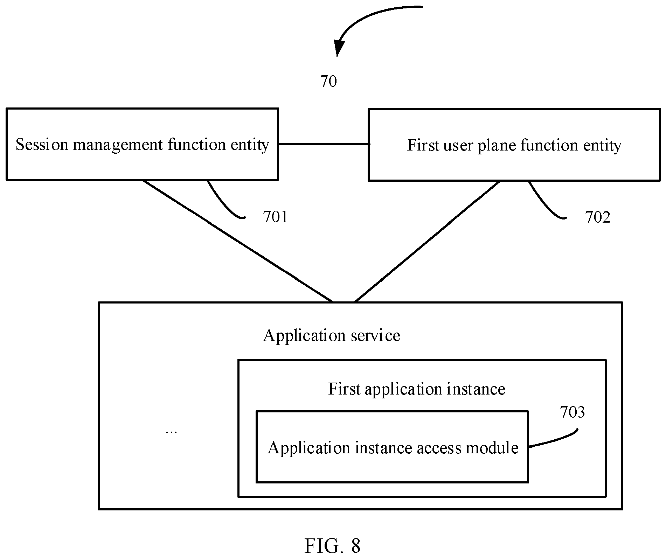

In one possible implementation, as shown in FIG. 8, the application instance access module 703 in this embodiment of this application may be integrated into the first application instance, and the first application instance may be run in an application server.

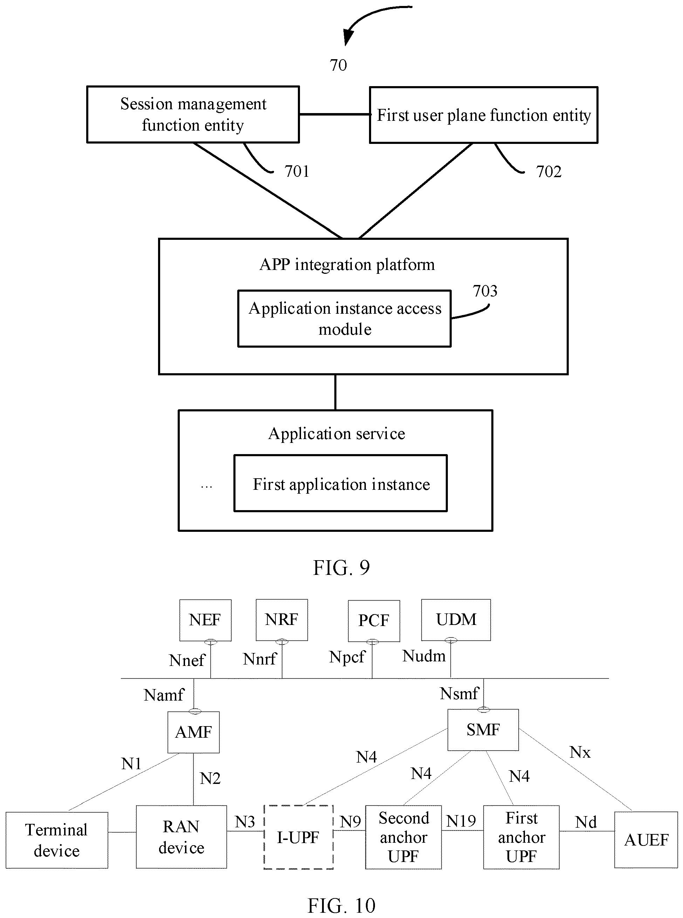

In another possible implementation, as shown in FIG. 9, the application instance access module 703 in this embodiment of this application may be deployed separating from the first application instance. For example, as shown in FIG. 9, the application instance access module 703 may be integrated into an APP integration platform (for example, the MEP in FIG. 3), and the first application instance may be run in an application server.

It should be noted that although not shown, the application server shown in FIG. 8 or FIG. 9 may further include another application instance. This embodiment of this application is merely described by using the first application instance in the application server as an example, and whether the application server runs another application instance is not specifically limited. In addition, in FIG. 9, a plurality of application servers may interact with the APP integration platform. This is not specifically limited in this embodiment of this application.

In a possible implementation, the communication system 70 shown in FIG. 7 may be applied to a current 4G network or 5G network or another future network. This is not specifically limited in this embodiment of this application.

For example, as shown in FIG. 10, if the communication system 70 shown in FIG. 7 is applied to the current 5G network, a network element or an entity corresponding to the session management function entity 701 in the communication system 70 shown in FIG. 7 may be an SMF in a 5G network architecture, and a network element or an entity corresponding to the first user plane function entity 702 in the communication system 70 shown in FIG. 7 may be a first anchor UPF in the 5G network architecture. In addition, a network element or an entity corresponding to the application instance access module 703 in the communication system 70 shown in FIG. 7 may be, for example, an application as a user equipment function (APP as user equipment function, AUEF). As shown in FIG. 8, the AUEF may be deployed in the first application instance in the application server; or as shown in FIG. 9, the AUEF may be deployed on the APP integration platform. Certainly, the AUEF may be deployed in another manner, for example, deployed on another existing function, device, or platform, or deployed on another newly added function, device, or platform. This is not specifically limited in this embodiment of this application.

In addition, as shown in FIG. 10, the current 5G network may further include an AMF, a NEF, a network function repository function (network exposure function repository function, NRF), unified data management (unified data management, UDM), a policy control function (policy control function, PCF), and another UPF (for example, a second anchor UPF and an I-UPF that correspond to a terminal device in FIG. 10). This is not specifically limited in this embodiment of this application.

Although not shown, the current 5G network may further include an authentication server function (authentication server function, AUSF), a network slice selection function (network slice selection function, NSSF), and the like. For related descriptions, refer to a diagram of a 5G system architecture (5G system architecture) in the 23501 standard. Details are not described herein.

As shown in FIG. 10, the terminal device accesses the 5G network by using a RAN device. The terminal device communicates with the AMF through an N1 interface (N1 for short). The RAN device communicates with the AMF through an N2 interface (N2 for short). The RAN device communicates with the I-UPF through an N3 interface (N3 for short). The I-UPF communicates with the second anchor UPF through an N9 interface (N9 for short). The second anchor UPF communicates with the first anchor UPF through an N19 interface (N19 for short). The SMF network element separately communicates with the I-UPF, the second anchor UPF, and the first anchor UPF through an N4 interface (N4 for short). The SMF network element communicates with the AUEF through an Nx interface (Nx for short). The first anchor UPF communicates with the AUEF through an Nd interface (Nd for short). In addition, control plane functions such as the AMF, the SMF, the NEF, the NRF, the PCF, or the UDM shown in FIG. 10 may interact with each other through a service-based interface. For example, an external service-based interface provided by the AMF may be Namf, an external service-based interface provided by the SMF may be Nsmf, an external service-based interface provided by the NEF may be Nnef, an external service-based interface provided by the NRF may be Nnrf, an external service-based interface provided by the PCF may be Npcf, and an external service-based interface provided by the UDM may be Nudm. For related descriptions, refer to the diagram of the 5G system architecture (5G system architecture) in the 23501 standard. Details are not described herein.

In a possible implementation, the terminal device in the embodiments of this application may be a device configured to implement a wireless communication function, for example, a terminal or a chip that can be used in the terminal. The terminal device may be deployed on land, including an indoor or outdoor device, a handheld device, or an in-vehicle device; or may be deployed on a water surface (for example, on a ship); or may be deployed in the air (for example, on an airplane, a balloon, or a satellite). The terminal may be UE, an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, an unmanned aerial vehicle (unmanned aerial vehicle, UAV), an unmanned aerial vehicle controller (UAV controller, UAVC), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or may be fixed.

In a possible implementation, the RAN device in the embodiments of this application is a device that provides a wireless communication function for the terminal device. For example, the access network device includes but is not limited to a next-generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, and the like.

In a possible implementation, the user plane network element, the access network device, the session management network element, the policy control network element, or the application function network element in the embodiments of this application may also be referred to as a communication apparatus or a communication device, and may be a general-purpose device or a dedicated device. This is not specifically limited in the embodiments of this application.

In a possible implementation, a related function of the session management function entity, the first user plane function entity, or the application instance access module in the embodiments of this application may be implemented by one device, may be jointly implemented by a plurality of devices, or may be implemented by one or more functional modules in one device. This is not specifically limited in the embodiments of this application. It can be understood that the foregoing function may be a network element in a hardware device, or may be a software function running on dedicated hardware, a combination of hardware and software, or a virtualization function instantiated on a platform (for example, a cloud platform).

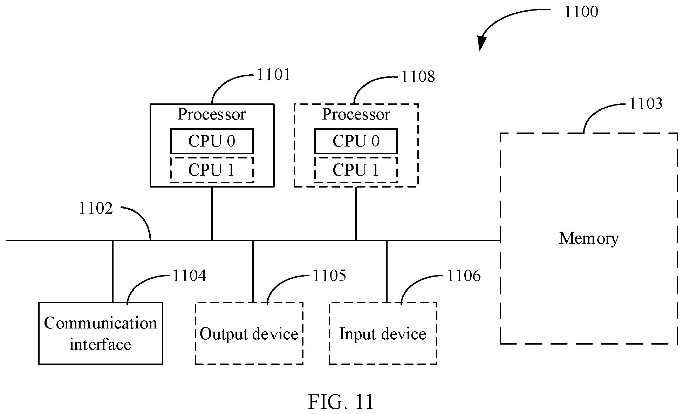

For example, the related function of the session management function entity, the first user plane function entity, or the application instance access module in the embodiments of this application may be implemented by using a communication apparatus 1100 in FIG. 11. FIG. 11 is a schematic diagram of a structure of a communication apparatus 1100 according to an embodiment of this application. The communication apparatus 1100 includes one or more processors 1101, a communication line 1102, and at least one communication interface (FIG. 11 is merely described by using an example in which a communication interface 1104 and one processor 1101 are included). In a possible implementation, a memory 1103 may be further included.

The processor 1101 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 1102 may include a channel, configured to connect different components.

The communication interface 1104 may be a transceiver module configured to communicate with another device or a communication network, for example, the Ethernet, a RAN, or a wireless local area network (wireless local area network, WLAN). For example, the transceiver module may be an apparatus such as a transceiver or a transceiver machine. In a possible implementation, the communication interface 1104 may alternatively be a transceiver circuit located in the processor 1101, and is configured to implement signal input and signal output of the processor.

The memory 1103 may be an apparatus having a storage function, for example, may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code having a form of an instruction or a data structure and that can be accessed by a computer. However, this is not limited thereto. The memory may exist independently and is connected to the processor by using the communication line 1102. The memory may alternatively be integrated with the processor.

The memory 1103 is configured to store computer-executable instructions for executing the solutions in this application, and the processor 1101 controls the execution. The processor 1101 is configured to execute the computer-executable instructions stored in the memory 1103, to implement the method for an application to access a network provided in the embodiments of this application.

Alternatively, in a possible implementation, in this embodiment of this application, the processor 1101 may perform a processing-related function in the method for an application to access a network provided in the following embodiment of this application, and the communication interface 1104 is responsible for communication with another device or a communication network. This is not specifically limited in this embodiment of this application.

In a possible implementation, the computer-executable instructions in this embodiment of this application may also be referred to as application program code. This is not specifically limited in this embodiment of this application.

In specific implementation, in an embodiment, the processor 1101 may include one or more CPUs, for example, a CPU 0 and a CPU 1 in FIG. 11.

In specific implementation, in an embodiment, the communication apparatus 1100 may include a plurality of processors, for example, the processor 1101 and a processor 1108 in FIG. 11. Each of the processors may be a single-core (single-core) processor or may be a multi-core (multi-core) processor. The processor herein may include at least one of the following various computing devices that run software, such as a central processing unit (central processing unit, CPU), a microprocessor, a digital signal processor (DSP), a microcontroller (microcontroller unit, MCU), or an artificial intelligence processor. Each computing device may include one or more cores configured to execute software instructions to perform an operation or processing.

In specific implementation, in an embodiment, the communication apparatus 1100 may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, or a projector (projector). The input device 1106 communicates with the processor 1101, and may receive user input in a plurality of manners. For example, the input device 1106 may be a mouse, a keyboard, a touchscreen device, a sensing device, or the like.

The communication apparatus 1100 may also be referred to as a communication apparatus sometimes, and may be a general-purpose device or a dedicated device. For example, the communication apparatus 1100 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 11. A type of the communication apparatus 1100 is not limited in this embodiment of this application.

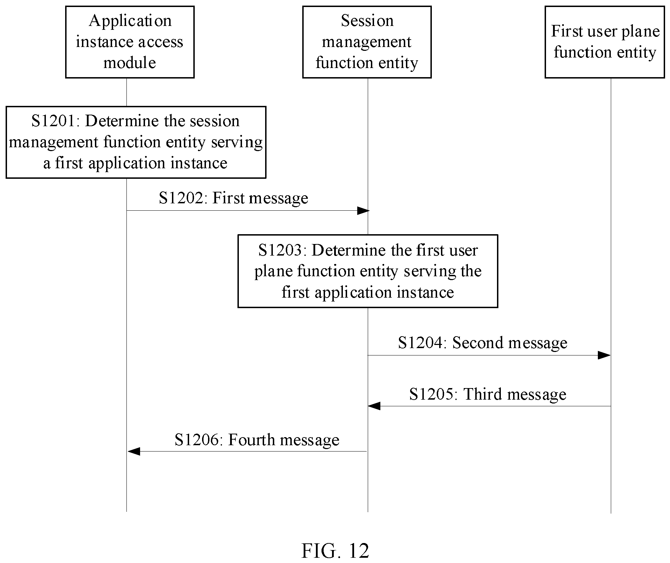

FIG. 12 shows a method for an application to access a network according to an embodiment of this application. The method includes the following steps.

S1201: An application instance access module determines a session management function entity serving a first application instance.

In a possible implementation, that an application instance access module determines a session management function entity serving a first application instance includes: The application instance access module obtains, from a network repository function entity, information about one or more session management function entities that support establishment of a connection for an application instance; and the application instance access module determines, based on the information about the one or more session management function entities, the session management function entity serving the first application instance.

S1202: The application instance access module sends a first message to the session management function entity. Correspondingly, the session management function entity receives the first message from the application instance access module, where the first message includes identification information of the first application instance, and the first message is used to request to establish a first connection for the first application instance.

In this embodiment of this application, the "first connection" established for the first application instance is a connection established for the first application instance between the first application instance and a mobile communication network, and is used by the first application instance to access the mobile communication network as a special terminal device, so that the first application instance can subsequently perform data communication with another device by using the first connection. For example, the first connection herein may be a packet data network (packet data network, PDN) connection in 4G or a PDU session in 5G, or may be another connection in another future network. This is uniformly described herein, and details are not described below again.

In this embodiment of this application, the identification information of the first application instance can uniquely determine the first application instance, and the identification information of the first application instance may be, for example, an APP instance permanent identifier (APP instance permanent identifier, AIPI) or an APP instance concealed identifier (APP instance concealed identifier, AICI). This is uniformly described herein, and details are not described below again.

In a possible implementation, in this embodiment of this application, the first message may further include a first parameter and/or application information corresponding to the first application instance.

For example, in this embodiment of this application, the first parameter includes at least one of the following parameters: location information (location information) and a session and service continuity (session and service continuity, SSC) mode that are of the first application instance, a data network name (data network name, DNN) corresponding to the first connection, or identification information of a network slice in which the first connection is located. For example, in this embodiment of this application, the identification information of the network slice in which the first connection is located may be, single network slice selection assistance information (single network slice selection assistance information, S-NSSAI) of the network slice in which the first connection is located. For example, in this embodiment of this application, the location information of the first application instance may be, a home public land mobile network (home public land mobile network, HPLMN) to which the first application instance subscribes; or the location information of the first application instance may be, for example, an area identifier of a tracking area served by the first application instance; or the location information of the first application instance may be, for example, a cell identifier of a cell served by the first application instance.

For example, in this embodiment of this application, the application information corresponding to the first application instance includes an application name, an application identifier, application domain name information, or the like.

S 1203: The session management function entity determines a first user plane function entity serving the first application instance.

In a possible implementation, in this embodiment of this application, the session management function entity may determine, based on the first parameter, the first user plane function entity serving the first application instance.

For example, the session management function entity may determine, based on the location information of the first application instance and the S-NSSAI of the network slice in which the first connection is located that are in the first parameter, the first user plane function entity serving the first application instance. For example, the session management function entity may determine, as the first user plane function entity, a user plane function entity that is in a user plane function entity supporting the S-NSSAI of the network slice in which the first connection is located and that is closest to an application server carrying the first application instance.

In another possible implementation, in this embodiment of this application, the session management function entity may further obtain subscription data of the first application instance from a unified data management function entity. Further, the session management function entity may determine, based on the subscription data of the first application instance, the first user plane function entity serving the first application instance.

For example, in this embodiment of this application, the subscription data of the first application instance includes at least one of an allowed connection type, subscribed location information of the first application instance, a default quality of service (quality of service, QoS) parameter, an allowed SSC mode, a subscribed DNN, or identification information of a subscribed network slice.

For example, the session management function entity may determine, based on the subscribed location information of the first application instance and the subscribed DNN that are in the subscription data of the first application instance, the first user plane function entity serving the first application instance. For example, the session management function entity may determine, as the first user plane function entity, a user plane function entity that is in a user plane function entity supporting the subscribed DNN of the first application instance and that is closest to an application server carrying the first application instance.

In this embodiment of this application, that the session management function entity obtains subscription data of the first application instance from a unified data management function entity may include: The session management function entity sends a fifth message to the unified data management function entity, where the fifth message includes the identification information of the first application instance, and the fifth message is used to request to obtain the subscription data of the first application instance; and the session management function entity receives the subscription data of the first application instance from the unified data management function entity.

In still another possible implementation, in this embodiment of this application, the session management function entity may further obtain the subscription data of the first application instance from the unified data management function entity. Further, the session management function entity may determine, based on the subscription data of the first application instance and the first parameter, the first user plane function entity serving the first application instance.

For example, the session management function entity may determine, based on the location information of the first application instance in the first parameter and the subscribed DNN of the first application instance in the subscription data of the first application instance, the first user plane function entity serving the first application instance. For example, the session management function entity may determine, as the first user plane function entity, a user plane function entity that is in a user plane function entity supporting the subscribed DNN of the first application instance and that is closest to an application server carrying the first application instance.

It should be noted that the foregoing examples are merely provided examples of several manners in which the session management function entity determines the first user plane function entity serving the first application instance. Certainly, the session management function entity may alternatively determine, in another manner, the first user plane function entity serving the first application instance. This is not specifically limited in this embodiment of this application.

In a possible implementation, in this embodiment of this application, the session management function entity may further allocate a first address to the first connection. The first address is used by a terminal device to perform data communication with the first application instance. For example, the terminal device may access the first application instance by using the first address.

For example, the first address in this embodiment of this application may include, an IP address (IP address), an IPv6 prefix (IPv6 Prefix), or a media access control (media access control, MAC) address. This is uniformly described herein, and details are not described below again.

S1204: The session management function entity sends a second message to the first user plane function entity. Correspondingly, the first user plane function entity receives the second message from the session management function entity, where the second message includes the identification information of the first application instance, and the second message is used to request to establish the first connection for the first application instance.

In a possible implementation, in this embodiment of this application, if the session management function entity allocates the first address to the first connection, the second message may further include the first address. The first address is used by the first user plane function entity to for route advertisement (route advertisement). In this way, in a subsequent data communication process, another entity or module may directly find the first user plane function entity through addressing based on the route advertised by the first user plane function entity. For example, the method for an application to access a network provided in this embodiment of this application may further include: The first user plane function entity receives second data from a second user plane function entity, and sends the second data to the first application instance by using the application instance access module, where the second user plane function entity finds the second user plane function entity through addressing based on the route advertised by the first user plane function entity. For a related addressing manner, refer to the conventional technology. Details are not described herein.

In a possible implementation, in this embodiment of this application, the first address may alternatively be allocated by the first user plane function entity. In other words, the first user plane function entity can allocate the first address to the first connection.

S1205: The first user plane function entity sends a third message to the session management function entity. Correspondingly, the session management function entity receives the third message from the first user plane function entity, where the third message includes an establishment result of the first connection, and the establishment result includes a success or a failure.

In a possible implementation, in this embodiment of this application, when the first address is allocated by the first user plane function entity, the third message further includes the first address.

S 1206: When the establishment result is a success, the session management function entity sends a fourth message to the application instance access module. Correspondingly, the application instance access module receives the fourth message from the session management function entity.

The fourth message includes the first address allocated by the session management function entity to the first connection, or includes the first address allocated by the first user plane function entity to the first connection.

In a possible implementation, in this embodiment of this application, after obtaining the first address, the application instance access module may advertise a route based on the first address. In this way, in a subsequent data communication process, another entity or module may directly find the application instance access module through addressing based on the route advertised by the application instance access module. For example, the method for an application to access a network provided in this embodiment of this application may further include: The application instance access module receives second data from a second user plane function entity, where the second user plane function entity finds the application instance access module through addressing based on the route advertised by the application instance access module. For a related addressing manner, refer to the conventional technology. Details are not described herein.

In a possible implementation, in the method for an application to access a network shown in FIG. 12, the first message and the second message may further include first path information allocated by the application instance access module to the first connection. The third message and the fourth message may further include second path information allocated by the first user plane function entity to the first connection. The first path information and the second path information are used to establish a first path that is in the first connection and that is between the first user plane function entity and the application instance access module, and the first path is used for data transmission between the first user plane function entity and the application instance access module. For example, after obtaining first data from the first application instance, the application instance access module sends the first data to the first user plane function entity by using the first path; or the application instance access module receives second data from the first user plane function entity by using the first path.

It should be noted that the "path" in this embodiment of this application may also be referred to as a tunnel (tunnel) or another name. This is not specifically limited in this embodiment of this application. For example, the first path information may be replaced with first tunnel information, and the second path information may be replaced with second tunnel information. This is not described in detail herein one by one.

For example, in this embodiment of this application, the first path between the first user plane function entity and the application instance access module may include, a GTP-U tunnel, a generic routing encapsulation (generic routing encapsulation, GRE) tunnel, or an IP tunnel. This is not specifically limited in this embodiment of this application.

In this embodiment of this application, corresponding to different types of paths, the first path information and the second path information may be different.

For example, assuming that the first path is the GTP-U tunnel, the first path information may be an address of the application instance access module, and the second path information may be an address of the first user plane function entity; or the first path information may be an endpoint identifier of the first path on the application instance access module side and the address of the application instance access module, and the second path information may be an endpoint identifier of the first path on the first user plane function entity side and the address of the first user plane function entity; or the first path information may be the endpoint identifier of the first path on the application instance access module side and the address and a port (port) number of the application instance access module, and the second path information may be the endpoint identifier of the first path on the first user plane function entity side and the address and a port (port) number of the first user plane function entity.

For example, assuming that the first path is the GRE tunnel, the first path information may be an address of the application instance access module, and the second path information may be an address of the first user plane function entity; or the first path information may be an endpoint identifier of the first path on the application instance access module side and the address of the application instance access module, and the second path information may be an endpoint identifier of the first path on the first user plane function entity side and the address of the first user plane function entity; or the first path information may be the endpoint identifier of the first path on the application instance access module side and the address and a key (key) of the application instance access module, and the second path information may be the endpoint identifier of the first path on the first user plane function entity side and the address and a key (key) of the first user plane function entity.

For example, assuming that the first path is the IP tunnel, the first path information may be an address of the application instance access module, and the second path information may be an address of the first user plane function entity; or the first path information may be the address and a port (port) number of the application instance access module, and the second path information may be the address and a port (port) number of the first user plane function entity.

The endpoint identifier in this embodiment of this application may be, for example, a fully qualified tunnel endpoint identifier (fully qualified tunnel endpoint identifier, FTEID). This is uniformly described herein, and details are not described below again.

In a possible implementation, in the method for an application to access a network shown in FIG. 12, the session management function entity may further construct, based on at least one of the first parameter, the application information corresponding to the first application instance, or the subscription data of the first application instance, a virtual local area network including the first user plane function entity.

For example, when going online, the first application instance registers the application information corresponding to the first application instance, and a terminal device may subscribe to a service corresponding to the first application instance. In this case, the session management function entity may construct, based on the application information corresponding to the first application instance, a virtual local area network by using the first user plane function entity serving the first application instance together with a user plane function entity serving the terminal device that subscribes to the service corresponding to the first application instance. Alternatively, the session management function entity may construct, based on the application information corresponding to the first application instance and the S-NSSAI that is in the first parameter and that is of the network slice in which the first connection is located, a virtual local area network by using the first user plane function entity serving the first application instance together with a user plane function entity that supports the S-NSSAI of the network slice in which the first connection is located and that is in a user plane function entity serving the terminal device that subscribes to the service corresponding to the first application instance. Alternatively, the session management function entity may construct, based on the application information corresponding to the first application instance and the subscribed DNN of the first application instance in the subscription data of the first application instance, a virtual local area network by using the first user plane function entity serving the first application instance together with a user plane function entity that supports the subscribed DNN of the first application instance and that is in a user plane function entity serving the terminal device that subscribes to the service corresponding to the first application instance.

It should be noted that in this embodiment of this application, a manner of constructing a virtual network is similar to an existing manner of constructing a 5GVN. For example, a difference lies in the following: In this embodiment of this application, when a virtual local area network is constructed, the first application instance may be considered as a special type of terminal device to construct a virtual local area network together with another common terminal device. In addition, in this embodiment of this application, if a virtual local area network can be constructed for the first application instance and a terminal device, in a procedure for establishing the first connection for the first application instance and a procedure for establishing a second connection for the terminal device, an address of a same virtual local area network needs to be allocated to the first connection and the second connection. For example, it is assumed that the first application instance is deployed in a specific area to provide a service for a terminal device that subscribes to a corresponding service in the area. In this case, in the procedure for establishing the first connection for the first application instance and the procedure for establishing the second connection for the terminal device, an address of a same virtual local area network needs to be allocated to the first connection and the second connection.

In a possible implementation, the method for an application to access a network provided in this embodiment of this application may further include: The session management function entity registers, with the network repository function entity, a function in which the session management function entity supports establishment of a connection for an application instance. Based on this solution, when a session management function entity is subsequently selected, a session management function entity that supports establishment of a connection for an application instance may be obtained from the network repository function entity.

In a possible implementation, the method for an application to access a network provided in this embodiment of this application may further include: The first user plane function entity registers, with the network repository function entity, a function in which the first user plane function entity supports establishment of a connection for an application instance. Based on this solution, when a user plane function entity is subsequently selected, a user plane function entity that supports establishment of a connection for an application instance may be obtained from the network repository function entity.

In a possible implementation, before the application instance access module determines the session management function entity serving the first application instance (step S 1201), the method for an application to access a network provided in this embodiment of this application may further include: The application instance access module receives a sixth message from the first application instance, where the sixth message includes the application information corresponding to the first application instance and is used to request for registration. After the application instance access module receives the fourth message from the session management function entity (step S1206), the method for an application to access a network provided in this embodiment of this application may further include: The application instance access module sends the first address to the first application instance. This solution is applicable to a scenario in which the application instance access module is deployed separating from the first application instance.

It can be understood that this embodiment of this application is described by using an example in which the first connection is established for the first application instance, and it is unnecessary that the first application instance can correspond to only one connection. One or more connections may be established for the first application instance, and each connection has a corresponding path and corresponding path information. This is uniformly described herein, and details are not described below again.

In this embodiment of this application, the session management function entity and the first user plane function entity in the mobile communication network establish the first connection for the first application instance between the first application instance and the mobile communication network, and a core network element allocates the first address to the first connection in the process of establishing the first connection. It can be learned that address allocation and management and a data plane forwarding path that correspond to the first application instance all fall within a control range of the mobile communication network. In other words, in this solution, the first application instance may access the mobile communication network as a special terminal device. Because the first application instance is a specific running instance of an application, based on this solution, flexibility of data exchange between the application and the mobile communication network can be improved. Further, based on this solution, an application may be incorporated into mobile communication network planning to implement plug-and-play of the application in a mobile communication system, to dynamically orchestrate an application service and find an optimal path. This helps implement a new business deployment and cooperation mode between an operator and an application service provider.

The processor 1101 in the communication apparatus 1100 shown in FIG. 11 may invoke the application program code stored in the memory 1103, to indicate the session management function entity, the application instance access module, or the first user plane function entity to perform actions of the session management function entity, the application instance access module, or the first user plane function entity in steps S1201 to S1206. This is not limited in this embodiment.

With reference to a specific example, the following specially describes the method for an application to access a network provided in the embodiments of this application.

It should be noted that names of messages between entities or modules, names of parameters in the messages, or the like in the following embodiments of this application are merely examples, and there may be other names in specific implementation. This is not specifically limited in this embodiment of this application.

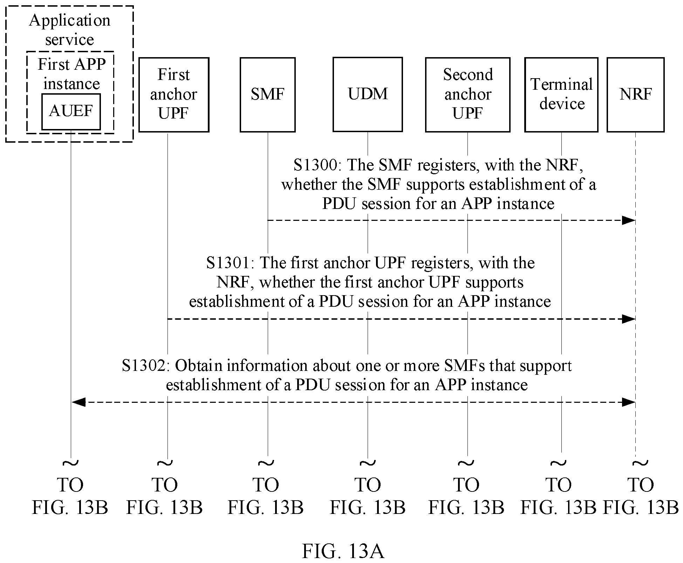

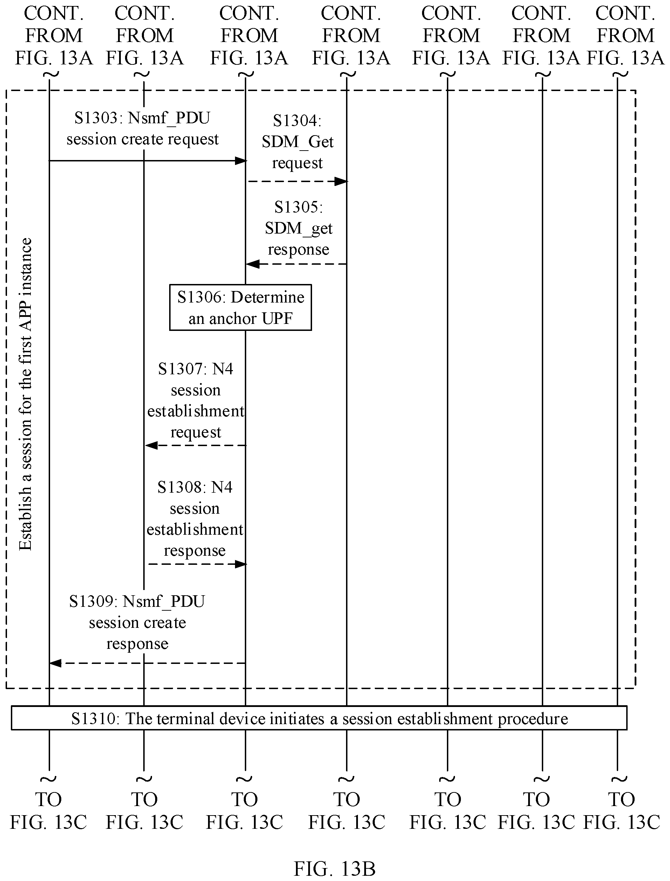

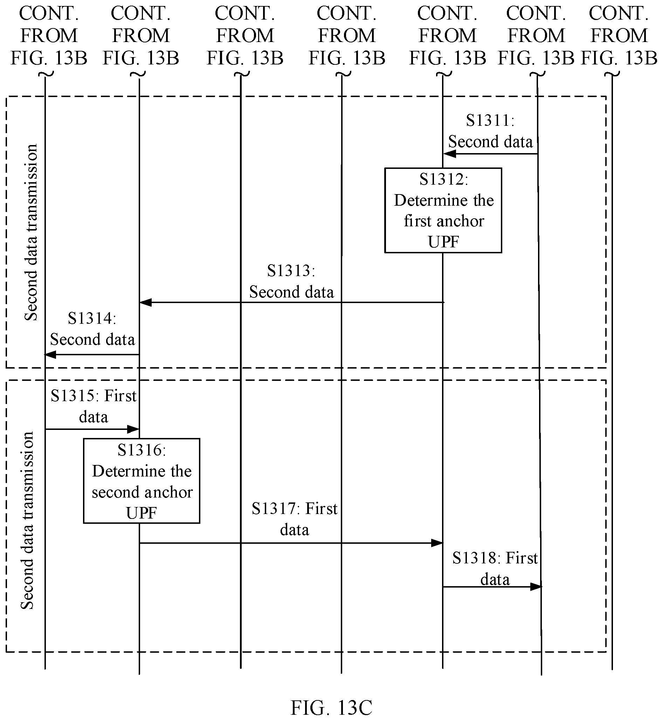

First, an example in which the communication system shown in FIG. 7 is applied to the 5G network shown in FIG. 10 is used. Based on the embodiment shown in FIG. 12, FIG. 13A to FIG. 13C show a method for an application to access a network according to an embodiment of this application. In the method for an application to access a network, a first APP instance in an application server provides an AUEF (that is, the AUEF may be considered as a functional module in the first APP instance). An SMF/UPF supports direct access of the first APP instance to the 5G network as a special terminal device, and supports functions such as address allocation and path establishment for a session established for the first APP instance (for ease of description, the session established for the first APP instance is referred to as the session of the first APP instance below for short). For example, a possible implementation of the method for an application to access a network includes the following steps S 1300 to S1302.

S1300: The SMF registers, with an NRF, whether the SMF supports establishment of a PDU session for an APP instance.

For example, in this embodiment of this application, the SMF may register, with the NRF by using an Nnrf_network function (network function, NF) management (Management)_NFRegister (Register) service operation or an Nnrf_NFManagement_NFUpdate (Update) service operation (service operation), whether the SMF supports establishment of a PDU session for an APP instance. An input parameter of the Nnrf_NFManagement_NFRegister service operation or the Nnrf_NFManagement_NFUpdate service operation includes at least indication information indicating whether the SMF supports establishment of a PDU session for an APP instance. Certainly, the input parameter of the Nnrf_NFManagement_NFRegister service operation or the Nnrf_NFManagement_NFUpdate service operation may further include another parameter. For details, refer to the existing 3GPP standard. Details are not described herein.

In a possible implementation, in this embodiment of this application, an SMF that supports establishment of a PDU session for an APP instance may also be referred to as an APP session management function (APP Session Management Function, ASMF). When the ASMF registers with the NRF that the ASMF supports establishment of a PDU session for an APP instance, a new information element (information element, IE) needs to be obtained through extension to support description of this function. For example, the ASMF may register, with the NRF by using the Nnrf_NFManagement_NFRegister service operation or the Nnrf_NFManagement_NFUpdate service operation, that the ASMF supports establishment of a PDU session for an APP instance. The input parameter of the Nnrf_NFManagement_NFRegister service operation or the Nnrf_NFManagement_NFUpdate service operation includes at least indication information indicating that the ASMF supports establishment of a PDU session for an APP instance. This is not specifically limited in this embodiment of this application.

S1301: A first anchor UPF registers, with the NRF, whether the first anchor UPF supports establishment of a PDU session for an APP instance.

For example, in this embodiment of this application, the first anchor UPF may register, with the NRF by using the Nnrf_NFManagement_NFRegister service operation or the Nnrf_NFManagement _NFUpdate service operation, whether the first anchor UPF supports establishment of a PDU session for an APP instance. The input parameter of the Nnrf_NFManagement_NFRegister service operation or the Nnrf_NFManagement_NFUpdate service operation includes at least indication information indicating whether the first anchor UPF supports establishment of a PDU session for an APP instance. Certainly, the input parameter of the Nnrf_NFManagement_NFRegister service operation or the Nnrf_NFManagement _NFUpdate service operation may further include another parameter. For details, refer to the existing 3GPP standard. Details are not described herein.

In a possible implementation, in this embodiment of this application, a first anchor UPF that supports establishment of a PDU session for an APP instance may also be referred to as a first anchor APP user plane function (APP user plane function, AUPF). When the first anchor AUPF registers, with the NRF, that the first anchor AUPF supports establishment of a PDU session for an APP instance, a new IE needs to be obtained through extension to support description of this function. For example, the first anchor AUPF may register, with the NRF by using the Nnrf_NFManagement_NFRegister service operation or the Nnrf_NFManagement_NFUpdate service operation, that the first anchor AUPF supports establishment of a PDU session for an APP instance. The input parameter of the Nnrf_NFManagement_NFRegister service operation or the Nnrf_NFManagement_NFUpdate service operation includes at least indication information indicating that the first anchor AUPF supports establishment of a PDU session for an APP instance. This is not specifically limited in this embodiment of this application.

S1302: The application server in which the first APP instance is located obtains, from the NRF, information about one or more SMFs that support establishment of a PDU session for an APP instance.

In this embodiment of this application, the information about the SMF includes identification information of the SMF. For example, in this embodiment of this application, the identification information of the SMF may be, an IP address of the SMF or a fully qualified domain name (fully qualified domain name, FQDN) of the SMF. This is not specifically limited in this embodiment of this application.

In a possible implementation, in this embodiment of this application, the information about the SMF may further include attribute information of the SMF, for example, load information (load information). This is not specifically limited in this embodiment of this application.

In a possible implementation, the application server in which the first APP instance is located may query, from the NRF by using an Nnrf_NFDiscovery_Request (Discovery_Request) service operation, information about an SMF that supports establishment of a PDU session for an APP instance. In this case, an input parameter of the Nnrf_NFDiscovery_Request service operation includes a function requirement for supporting establishment of a PDU session for an APP instance, and an output parameter of the Nnrf_NFDiscovery_Request service operation includes information about one or more SMFs that support establishment of a PDU session for an APP instance.

In another possible implementation, the application server in which the first APP instance is located may subscribe, to the NRF by using an Nnrf_NFManagement_NFStatusSubscribe (StatusSubscribe) service operation, information about an SMF that supports establishment of a PDU session for an APP instance. In this case, an input parameter of the Nnrf_NFManagement StatusSubscribe service operation includes a function requirement for supporting establishment of a PDU session for an APP instance. Further, the NRF may return, to the APP instance by using an Nnrf_NFManagement_StatusNotify (StatusNotify) service operation, information about one or more SMFs that support establishment of a PDU session for an APP instance.

Certainly, in this embodiment of this application, if the application server in which the first APP instance is located cannot obtain, from the NRF, information about one or more SMFs that support establishment of a PDU session for an APP instance, the application server in which the first APP instance is located may alternatively configure an SMF that supports establishment of a PDU session for an APP instance. For example, the application server may determine a specific SMF as the SMF that supports establishment of a PDU session for an APP instance. This is not specifically limited in this embodiment of this application. Alternatively, in this embodiment of this application, step S1302 may not be performed. Instead, the application server in which the first APP instance is located directly configures an SMF that supports establishment of a PDU session for an APP instance. For example, the application server in which the first APP instance is located may determine a specific SMF as the SMF that supports establishment of a PDU session for an APP instance. This is not specifically limited in this embodiment of this application.

Further, in this embodiment of this application, the application server in which the first APP instance is located may initiate a session establishment procedure, which includes the following step S1303.

S1303: The application server in which the first APP instance is located sends an Nsmf_PDU session create (PDU session create) request to a selected SMF that supports establishment of a PDU session for an APP instance. Correspondingly, the SMF receives the Nsmf_PDU session create request from the application server, where the Nsmf_PDU session create request includes identification information of the first APP instance, and is used to request to establish a PDU session for the first APP instance.

For related description of the identification information of the first APP instance, refer to the embodiment shown in FIG. 12. Details are not described herein again.

It should be noted that the Nsmf_PDU session create request in this embodiment of this application is merely an example of the first message in FIG. 12, and the first message may alternatively be another message. This is not specifically limited in this embodiment of this application.

It should be noted that this embodiment of this application is described by using an example in which the SMF in step S1300 is the selected SMF that supports establishment of a PDU session for an APP instance. This is uniformly described herein, and details are not described below again.

In a possible implementation, in this embodiment of this application, when the NRF returns, to the application server, information about a plurality of SMFs that support establishment of a PDU session for an APP instance, the application server may determine, based on attribute information (for example, load information) of the SMFs, an SMF serving the first APP instance, or may randomly select the SMF serving the first APP instance. This is not specifically limited in this embodiment of this application.

In a possible implementation, the Nsmf_PDU session create request in this embodiment of this application may further include application information corresponding to the first APP instance, and the application information can uniquely determine an APP. For example, the application information may be, for example, an APP name, an APP ID, or APP domain name information. This is uniformly described herein, and details are not described below again.

In a possible implementation, the Nsmf_PDU session create request in this embodiment of this application may further include first path information, the first path information is used to establish a path between the first anchor UPF and the AUEF, and the first anchor UPF is an anchor UPF serving the first APP instance. For related description of the first path information, refer to the embodiment shown in FIG. 12. Details are not described herein again.

In a possible implementation, the Nsmf_PDU session create request in this embodiment of this application may further include a first parameter. For related description of the first parameter, refer to the embodiment in FIG. 12. Details are not described herein again.

In a possible implementation, the method for an application to access a network provided in this embodiment of this application may further include the following steps S1304 and S1305.

S1304: The SMF sends a subscription data management (subscriber data management, SDM)_get request (Get Request) to a UDM. Correspondingly, the UDM receives the SDM_get request from the SMF, where the SDM_get request includes the identification information of the first APP instance, and is used to request subscription data of the first APP instance.

It should be noted that the SDM_get request of the SMF in this embodiment of this application is merely an example of the fifth message in FIG. 12, and the fifth message may alternatively be another message. This is not specifically limited in this embodiment of this application.

In a possible implementation, in this embodiment of this application, when the Nsmf_PDU session create request includes the application information corresponding to the first APP instance, the SDM_get request may further include the application information corresponding to the first APP instance. The application information corresponding to the first APP instance is used to construct a virtual local area network including the first anchor UPF, and the first anchor UPF is an anchor UPF serving the first APP instance.

In a possible implementation, in this embodiment of this application, when the Nsmf_PDU session create request includes the first parameter, the SDM_get request may further include the first parameter. The first parameter is used to construct a virtual local area network including the first anchor UPF.

S1305: The UDM sends an SDM_get response (Get Response) to the SMF. Correspondingly, the SMF receives the SDM_get response from the UDM, where the SDM_get response includes the subscription data of the first APP instance.

For related description of the subscription data of the first APP instance, refer to the embodiment in FIG. 12. Details are not described herein again.

In this embodiment of this application, a default QoS parameter in the subscription data of the first APP instance may include, for example, a 5G QoS identifier (5G QoS identifier, 5QI) or an allocation and retention priority (allocation and retention priority, ARP). This is not specifically limited in this embodiment of this application.

Further, the method for an application to access a network provided in this embodiment of this application may include the following steps S1306 to S1309.

S1306: The SMF determines an anchor UPF serving the first APP instance.

It should be noted that this embodiment of this application is described by using an example in which the first anchor UPF in step S1301 is a selected anchor UPF serving the first APP instance. This is uniformly described herein, and details are not described below again.

In a possible implementation, in this embodiment of this application, the SMF may query, from the NRF, information about a UPF that supports establishment of a PDU session for an APP instance. Specifically, the SMF sends a query request to the NRF, where the query request includes location information of the first APP instance obtained by using step S1303 or location information of the first APP instance obtained by using step S 1305. Further, the NRF sends, to the SMF, information about one or more UPFs that support establishment of a PDU session for an APP instance.

In this embodiment of this application, the information about the UPF includes identification information of the UPF. For example, in this embodiment of this application, the identification information of the UPF may be, an IP address of the UPF. This is not specifically limited in this embodiment of this application.

In a possible implementation, in this embodiment of this application, the information about the UPF may further include location information of the UPF, attribute information (for example, load information) of the UPF, or the like. This is not specifically limited in this embodiment of this application.

In a possible implementation, in this embodiment of this application, when the NRF returns, to the SMF, information about a plurality of UPFs that support establishment of a PDU session for an APP instance, the SMF may determine, based on at least one of the location information of the UPF, the attribute information of the UPF, the location information of the first APP instance obtained by using step S1303 and/or the location information of the first APP instance obtained by using step S1305, an SSC mode, a DNN, and identification information of a network slice, the anchor UPF serving the first APP instance. For details, refer to an existing manner in which an SMF selects a UPF serving a terminal device. Details are not described herein.

Certainly, in this embodiment of this application, if the SMF cannot obtain, from the NRF, information about one or more UPFs that support establishment of a PDU session for an APP instance, the SMF may alternatively configure a UPF that supports establishment of a PDU session for an APP instance. For example, the SMF may determine a specific UPF as the UPF that supports establishment of a PDU session for an APP instance. This is not specifically limited in this embodiment of this application.

S1307: The SMF sends an N4 session establishment request (N4 session establishment request) to the selected first anchor UPF. Correspondingly, the first anchor UPF receives the N4 session establishment request from the SMF, where the N4 session establishment request includes the identification information of the first APP instance, and is used to request to establish a PDU session for the first APP instance.

It should be noted that the N4 session establishment request in this embodiment of this application is merely an example of the second message in FIG. 12, and the second message may alternatively be another message. This is not specifically limited in this embodiment of this application.

In a possible implementation, in this embodiment of this application, when the Nsmf_PDU session create request in step S1303 includes the first path information, the N4 session establishment request further includes the first path information.

In a possible implementation, in this embodiment of this application, when the subscription data of the first APP instance includes the default QoS parameter, the N4 session establishment request may further include QoS policy information determined based on the QoS parameter. The QoS policy information is used by the first anchor UPF to subsequently send data. This is not specifically limited in this embodiment of this application.

S1308: The first anchor UPF sends an N4 session establishment response (N4 session establishment response) to the SMF. Correspondingly, the SMF receives the N4 session establishment response from the first anchor UPF, where the N4 session establishment response includes a session establishment result, and the session establishment result may be, for example, a success or a failure.

It should be noted that the N4 session establishment response in this embodiment of this application is merely an example of the third message in FIG. 12, and the third message may alternatively be another message. This is not specifically limited in this embodiment of this application.

In a possible implementation, in this embodiment of this application, the first anchor UPF may allocate second path information, where the second path information is used to establish the path between the first anchor UPF and the AUEF. Further, the N4 session establishment response may include the second path information. For related description of the second path information, refer to the embodiment shown in FIG. 12. Details are not described herein again.

In a possible implementation, the first anchor UPF in this embodiment of this application may further support functions such as routing policy advertisement and forwarding path selection for the first APP instance in the 5G network. This is not specifically limited in this embodiment of this application.

In addition, in this embodiment of this application, the SMF or the first anchor UPF may further allocate a first address to the session of the first APP instance. For related description of the first address, refer to the embodiment shown in FIG. 12. Details are not described herein again.

S1309: After the SMF determines that the session is successfully established, the SMF sends a Nsmf_PDU session create (PDU session create) response to the application server in which the first APP instance is located. Correspondingly, the application server in which the first APP instance is located receives the Nsmf_PDU session create response from the SMF, where the Nsmf_PDU session create response includes a session identifier allocated by the SMF to the first APP instance and the first address allocated by the SMF or the first anchor UPF to the session of the first APP instance.

It should be noted that the Nsmf_PDU session create response in this embodiment of this application is merely an example of the fourth message in FIG. 12, and the fourth message may alternatively be another message. This is not specifically limited in this embodiment of this application.

In a possible implementation, in this embodiment of this application, if the N4 session establishment response in step S1308 includes the second path information, the Nsmf_PDU session create response may further include the second path information.

In a possible implementation, in this embodiment of this application, when the first APP instance obtains the second path information and the first anchor UPF obtains the first path information, it may be considered that establishment of the path between the first anchor UPF and the AUEF in the first APP instance is completed.

In a possible implementation, in this embodiment of this application, the application server in which the first APP instance is located may further advertise a route based on the first address allocated by the SMF or the first anchor UPF to the session of the first APP instance. This is not specifically limited in this embodiment of this application.

The foregoing steps S1303 to S1309 provide a session establishment procedure for the first APP instance in the 5G network. Certainly, when a state of the first APP instance changes, a session update procedure for the first APP instance in the 5G network may be completed by extending a Nsmf_PDU session_update (Update) service or extending a new service type. Alternatively, when the first APP instance goes offline, a session release procedure for the first APP instance in the 5G network may be completed by extending an Nsmf_PDU session_release (Release) service or extending a new service type. Details are not described herein in this embodiment of this application.

S1310: A terminal device initiates a session establishment procedure. For related implementation, refer to the conventional technology. Details are not described herein. This embodiment of this application is described by using an example in which an anchor UPF serving the terminal device is a second anchor UPF.

In a possible implementation, in this embodiment of this application, in a process of establishing a session for the first APP instance and the terminal device, because the first APP instance may be considered as a special terminal device, a function of constructing a virtual local area network based on an attribute of the first APP instance or an attribute of the terminal device may be added to the UDM. For example, the UDM may dynamically construct a virtual local area network based on at least one of the first parameter, the application information corresponding to the first APP instance, or the subscription data of the first APP instance; or the UDM may construct a virtual local area network based on a virtual network identifier, in the UDM, that is preset in subscription data of the first APP instance and the terminal device. For a specific manner of constructing a virtual local area network, refer to the embodiment shown in FIG. 12. Details are not described herein again. It should be noted that the foregoing manner in which the UDM constructs a virtual local area network based on the attribute of the first APP instance or the attribute of the terminal device is merely a possible implementation. In this embodiment of this application, in the process of establishing the session for the first APP instance and the terminal device, another network function or network entity may select a virtual local area network based on a related attribute. This is not specifically limited in this embodiment of this application.

In this embodiment of this application, if a virtual local area network can be constructed for the first APP instance and the terminal device, the SMF may add, to a forwarding policy set in the same virtual local area network, addresses and N19 tunnel information that are allocated by the 5G network to the sessions of the terminal device and the first APP instance that belong to the same virtual local area network, and deliver the addresses and the N19 tunnel information to UPFs corresponding to all terminal devices and the first APP instance in the virtual local area network, to implement route query and forwarding processing in a virtual local area network layer. This is not specifically limited in this embodiment of this application. For related description of the N19 tunnel information, refer to the preamble part of the embodiments. Details are not described herein again.

Further, after the procedure for establishing the session for the terminal device and the procedure for establishing the session for the first APP instance are completed, a self-organizing network that can implement plug-and-play of an application service can be formed between the terminal device and the APP instance, to implement mutual data access between the terminal device and the application server in which the first APP instance is located. The following is separately described by using an example in which the terminal device sends second data to the application server in which the first APP instance is located and an example in which the application server in which the first APP instance is located sends first data to the terminal device.

For example, a virtual local area network can be constructed for the first APP instance and the terminal device, and the terminal device sends the second data to the application server in which the first APP instance is located. In this case, the method for an application to access a network includes the following steps.

S1311: The terminal device sends the second data to the second anchor UPF. Correspondingly, the second anchor UPF receives the second data from the terminal device, where the second data includes a source address and a destination address, the source address is a second address allocated by a core network to the session of the terminal device in the procedure for establishing the session for the terminal device, and the destination address is the first address allocated by the core network to the session of the first APP instance in the procedure for establishing the session for the first APP instance.

It should be noted that in this embodiment of this application, the terminal device may send the second data to the second anchor UPF by using an I-UPF, or may directly send the second data to the second anchor UPF. This is not specifically limited in this embodiment of this application.

S1312: The second anchor UPF determines, based on the destination address, the first anchor UPF serving the first APP instance.

In this embodiment of this application, the second anchor UPF may query whether the destination address belongs to an address range allocated to the virtual local area network in which the terminal device is located. When the destination address belongs to the address range allocated to the virtual local area network in which the terminal device is located, the second anchor UPF may further determine, based on the destination address, the first anchor UPF serving the first APP instance.

S1313: The second anchor UPF sends the second data to the first anchor UPF through an N19 tunnel between the first anchor UPF and the second anchor UPF. Correspondingly, the first anchor UPF receives the second data from the second anchor UPF.

In this embodiment of this application, when sending the second data to the first anchor UPF through the N19 tunnel between the first anchor UPF and the second anchor UPF, the second anchor UPF may encapsulate the second data by using corresponding N19 tunnel information. For details, refer to an existing manner of transmitting data through the N19 tunnel. Details are not described herein.

S1314: The first anchor UPF sends the second data to the application server in which the first APP instance is located. Correspondingly, the application server in which the first APP instance is located receives the second data from the first anchor UPF.

In this embodiment of this application, when sending, by using the path between the first anchor UPF and the AUEF, the second data to the application server in which the first APP instance integrated with the AUEF is located, the first anchor UPF may encapsulate the second data by using the first path information and the second path information. For details, refer to an existing data transmission manner. Details are not described herein.

It should be noted that the foregoing steps S1311 to S1314 are described by using an example in which a virtual local area network can be constructed for the first APP instance and the terminal device. In a possible implementation, in this embodiment of this application, the second data may not be transmitted through the N19 tunnel between the first anchor UPF and the second anchor UPF. For example, when in the procedure for establishing the session for the first APP instance, the application server in which the first APP instance is located advertises a route based on the first address allocated by the SMF or the first anchor UPF to the session of the first APP instance, in this embodiment of this application, after receiving the second data, the second anchor UPF may directly find the application server through addressing in an existing routing manner based on the first address advertised by the application server in which the first APP instance is located, so that the second anchor UPF can forward the second data to the application server. This is not specifically limited in this embodiment of this application. Alternatively, for example, in this embodiment of this application, when in the procedure for establishing the session for the first APP instance, the first anchor UPF supports routing policy advertisement for the first APP instance in the 5G network, in this embodiment of this application, after receiving the second data, the second anchor UPF may directly find the first anchor UPF through addressing in an existing routing manner based on a routing policy advertised by the first anchor UPF to the outside, so that the second anchor UPF sends the second data to the first anchor UPF. After receiving the second data, the first anchor UPF sends the second data to the application server in which the first APP instance is located. This is not specifically limited in this embodiment of this application.

For example, a virtual local area network can be constructed for the first APP instance and the terminal device, and the application server in which the first APP instance is located sends the first data to the terminal device. In this case, the method for an application to access a network includes the following steps.

S1315: The application server in which the first APP instance is located sends the first data to the first anchor UPF. Correspondingly, the first anchor UPF receives the first data from the application server in which the first APP instance is located, where the first data includes a source address and a destination address, the source address is the first address allocated by a core network to the session of the first APP instance in the procedure for establishing the session for the first APP instance, and the destination address is a second address allocated by the core network to the session of the terminal device in the procedure for establishing the session for the terminal device.

In this embodiment of this application, when sending the first data to the first anchor UPF by using the path between the first anchor UPF and the AUEF, the application server in which the first APP instance integrated with the AUEF is located may encapsulate the first data by using the first path information and the second path information. For details, refer to an existing data transmission manner. Details are not described herein.

S1316: The first anchor UPF determines, based on the destination address, the second anchor UPF serving the terminal device.

In this embodiment of this application, the first anchor UPF may query whether the destination address belongs to an address range allocated to the virtual local area network in which the first APP instance is located. When the destination address belongs to the address range allocated to the virtual local area network in which the first APP instance is located, the first anchor UPF may further determine, based on the destination address, the second anchor UPF serving the terminal device.

S1317: The first anchor UPF sends the first data to the second anchor UPF through an N19 tunnel between the first anchor UPF and the second anchor UPF. Correspondingly, the second anchor UPF receives the first data from the first anchor UPF.

In this embodiment of this application, when sending the first data to the second anchor UPF through the N19 tunnel between the first anchor UPF and the second anchor UPF, the first anchor UPF may encapsulate the first data by using corresponding N19 tunnel information. For details, refer to an existing manner of transmitting data through the N19 tunnel. Details are not described herein.

S1318: The second anchor UPF sends the first data to the terminal device. Correspondingly, the terminal device receives the first data from the second anchor UPF.

It should be noted that in this embodiment of this application, the second anchor UPF may send the first data to the terminal device by using an I-UPF, or may directly send the first data to the terminal device. This is not specifically limited in this embodiment of this application.

It should be noted that the foregoing steps S1315 to S1318 are described by using an example in which a virtual local area network can be constructed for the first APP instance and the terminal device. In a possible implementation, in this embodiment of this application, the first data may not be transmitted through the N19 tunnel between the first anchor UPF and the second anchor UPF. For example, when in the procedure for establishing the session for the terminal device, the second anchor UPF advertises a route based on the second address allocated by the SMF or the second anchor UPF to the session of the terminal device, in this embodiment of this application, the application server in which the first APP instance is located may directly find the second anchor UPF through addressing in an existing routing manner based on the second address advertised by the second anchor UPF, so that the second anchor UPF can forward the first data to the terminal device. This is not specifically limited in this embodiment of this application.

In this embodiment of this application, the SMF and the first anchor UPF in the mobile communication network establish the session for the first APP instance, and allocate the first address to the session of the first APP instance in the session establishment process. It can be learned that address allocation and management and a data plane forwarding path that correspond to the first application instance all fall within a control range of the mobile communication network. In other words, in this solution, the first APP instance may access the 5G network as a special terminal device. Because the first APP instance is a specific running instance of an application, based on this solution, flexibility of data exchange between the application and the mobile communication network can be improved. Further, based on this solution, an application may be incorporated into mobile communication network planning to implement plug-and-play of the application in a mobile communication system, to dynamically orchestrate an application service and find an optimal path. This helps implement a new business deployment and cooperation mode between an operator and an application service provider.

The processor 1101 in the communication apparatus 1100 shown in FIG. 11 may invoke the application program code stored in the memory 1103, to indicate the SMF, the application server, or the first anchor UPF to perform actions of the SMF, the application server, or the first anchor UPF in the foregoing steps S1300 to S1318. This is not limited in this embodiment.

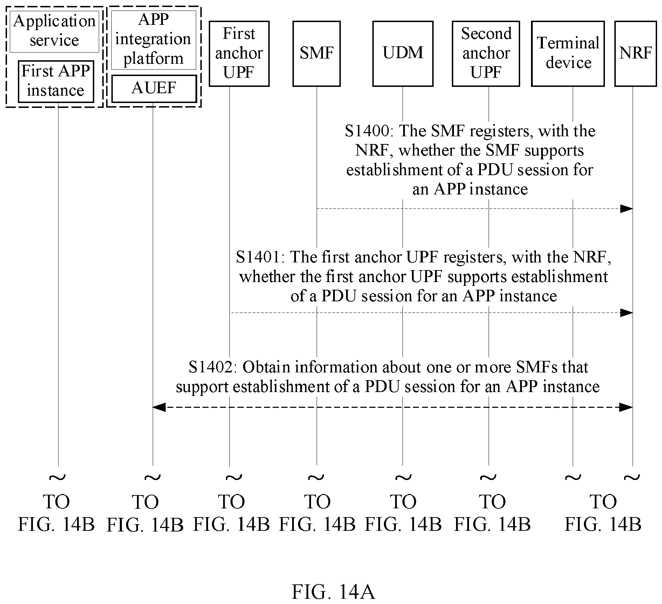

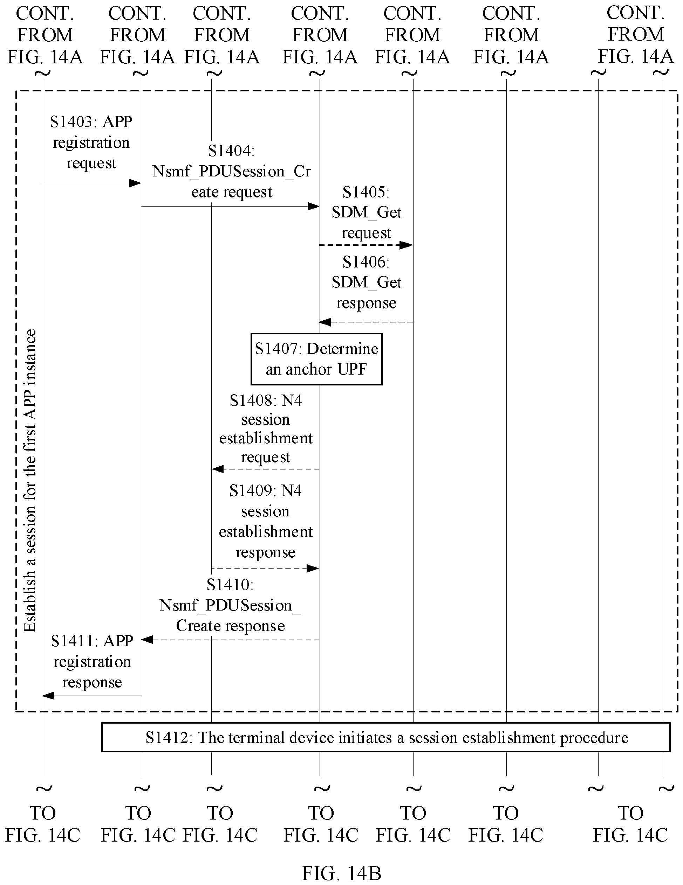

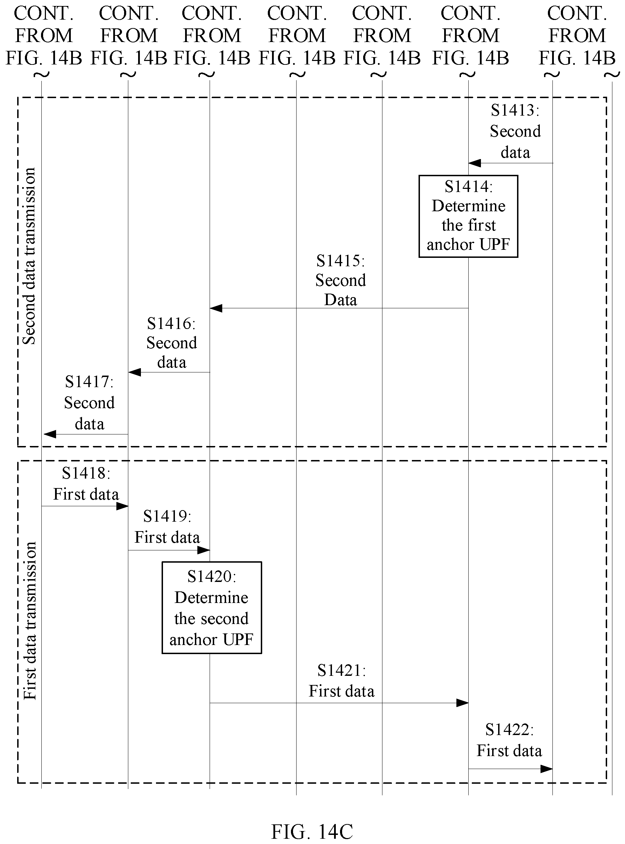

Second, an example in which the communication system shown in FIG. 7 is applied to the 5G network shown in FIG. 10 is used. Based on the embodiment shown in FIG. 12, FIG. 14A to FIG. 14C show another method for an application to access a network according to an embodiment of this application. In the method for an application to access a network, based on the procedure in the embodiment shown in FIG. 13A to FIG. 13C, to avoid a large amount of adaptation work for independently developing an AUEF for a first APP instance, the AUEF may be deployed separating from the first APP instance (as shown in FIG. 6, an example in which an APP integration platform provides a unified AUEF is used for illustration). In addition, with reference to original online and offline procedures of the first APP instance, when the first APP instance goes online or offline, an SMF/UPF supports direct access of the first APP instance to the 5G network as a special terminal device by using the AUEF, and supports functions such as address allocation and path establishment for a session established for the first APP instance (for ease of description, the session established for the first APP instance is referred to as the session of the first APP instance below for short). For example, a possible implementation of the method for an application to access a network includes the following steps S1400 to S1402.

S1400: The SMF registers, with an NRF, whether the SMF supports establishment of a PDU session for an APP instance.

For specific implementation of step S1400, refer to step S1300 in the embodiment shown in FIG. 13A to FIG. 13C. Details are not described herein again.

S1401: A first anchor UPF registers, with the NRF, whether the first anchor UPF supports establishment of a PDU session for an APP instance.

For specific implementation of step S1401, refer to step S1301 in the embodiment shown in FIG. 13A to FIG. 13C. Details are not described herein again.

S1402: The APP integration platform on which the AUEF is located obtains, from the NRF, information about one or more SMFs that support establishment of a PDU session for an APP instance.

For a manner in which the APP integration platform on which the AUEF is located obtains, from the NRF in step S1402, information about one or more SMFs that support establishment of a PDU session for an APP instance, refer to a manner in which the application server in which the first APP instance is located obtains, from the NRF in step S1302 in the embodiment shown in FIG. 13A to FIG. 13C, information about one or more SMFs that support establishment of a PDU session for an APP instance. For example, a difference lies in that the application server in which the first APP instance is located in step S1302 is replaced with the APP integration platform on which the AUEF is located in step S1402. Details are not described herein again.

Further, in this embodiment of this application, the application server in which the first APP instance is located may initiate a session establishment procedure, which includes the following steps S1403 and S1404.

S1403: When the first APP instance goes online on the APP integration platform, the application server in which the first APP instance is located sends an APP registration request (APP register request) to the APP integration platform on which the AUEF is located. Correspondingly, the APP integration platform on which the AUEF is located receives the APP registration request from the application server in which the first APP instance is located, where the APP registration request includes application information corresponding to the first APP instance. For related description of the application information, refer to the embodiment shown in FIG. 13A to FIG. 13C. Details are not described herein again.

S 1404: After allocating identification information of the first APP instance to the first APP instance, the AUEF on the APP integration platform sends an Nsmf_PDU session create (PDU session create) request to a selected SMF that supports establishment of a PDU session for an APP instance. Correspondingly, the SMF receives the Nsmf_PDU session create request from the APP integration platform on which the AUEF is located, where the Nsmf_PDU session create request includes the identification information of the first APP instance, and is used to request to establish a PDU session for the first APP instance.

For related description of the identification information of the first APP instance, refer to the embodiment shown in FIG. 12. Details are not described herein again.

It should be noted that this embodiment of this application is described by using an example in which the SMF in step S1400 is the selected SMF that supports establishment of a PDU session for an APP instance. This is uniformly described herein, and details are not described below again.

In a possible implementation, in this embodiment of this application, when the NRF returns, to the APP integration platform on which the AUEF is located, information about a plurality of SMFs that support establishment of a PDU session for an APP instance, the APP integration platform on which the AUEF is located may determine, based on attribute information (for example, load information) of the SMFs, an SMF serving the first APP instance; or may randomly select the SMF serving the first APP instance. This is not specifically limited in this embodiment of this application.

In a possible implementation, the Nsmf_PDU session create request in this embodiment of this application may further include the application information corresponding to the first APP instance. For related description of the application information, refer to the embodiment shown in FIG. 13A to FIG. 13C. Details are not described herein again.

In a possible implementation, the Nsmf_PDU session create request in this embodiment of this application may further include first path information, the first path information is used to establish a path between the first anchor UPF and the AUEF, and the first anchor UPF is an anchor UPF serving the first APP instance. For related description of the first path information, refer to the embodiment shown in FIG. 12. Details are not described herein again.

In a possible implementation, the Nsmf_PDU session create request in this embodiment of this application may further include a first parameter. For related description of the first parameter, refer to the embodiment in FIG. 12. Details are not described herein again.

Steps S1405 to S1409 are the same as steps S1304 to S1309 in the embodiment shown in FIG. 5, and details are not described herein again.

S1410: After the SMF determines that the session is successfully established, the SMF sends a Nsmf_PDU session create (PDU session create) response to the APP integration platform on which the AUEF is located. Correspondingly, the APP integration platform on which the AUEF is located receives the Nsmf_PDU session create response from the SMF, where the Nsmf_PDU session create response includes a session identifier allocated by the SMF to the first APP instance and the first address allocated by the SMF or the first anchor UPF to the session of the first APP instance.

In a possible implementation, in this embodiment of this application, if the N4 session establishment response in step S1409 includes second path information, the Nsmf_PDU session create response may further include the second path information.

In a possible implementation, in this embodiment of this application, when the APP integration platform obtains the second path information and the first anchor UPF obtains the first path information, it may be considered that establishment of the path between the first anchor UPF and the AUEF on the APP integration platform is completed.

S1411: The APP integration platform on which the AUEF is located sends an APP registration response (APP register response) to the application server in which the first APP instance is located. Correspondingly, the application server in which the first APP instance is located receives the APP registration response from the APP integration platform on which the AUEF is located, where the APP registration response includes the session identifier allocated by the SMF to the first APP instance and the first address allocated by the SMF or the first anchor UPF to the session of the first APP instance.

In a possible implementation, in this embodiment of this application, the application server in which the first APP instance is located may further advertise a route based on the first address allocated by the SMF or the first anchor UPF to the session of the APP instance. This is not specifically limited in this embodiment of this application.

The foregoing steps S1403 to S1411 provide a session establishment procedure for the first APP instance in the 5G network when the first APP instance goes online on the APP integration platform. Certainly, when a state of the first APP instance changes, the application server in which the first APP instance is located may send an APP registration update request to the APP integration platform on which the AUEF is located, so that the APP integration platform on which the AUEF is located can complete a session update procedure for the first APP instance in the 5G network by extending an Nsmf_PDU session_update (Update) service or extending a new service type. Alternatively, when the first APP instance goes offline, the APP integration platform on which the AUEF is located may complete a session release procedure for the first APP instance in the 5G network by extending a Nsmf_PDU session_release (Release) service or extending a new service type. Details are not described herein in this embodiment of this application.

S1412: A terminal device initiates a session establishment procedure. For related implementation, refer to the conventional technology. Details are not described herein. This embodiment of this application is described by using an example in which an anchor UPF serving the terminal device is a second anchor UPF.

In a possible implementation, in this embodiment of this application, in a process of establishing a session for the first APP instance and the terminal device, because the first APP instance may be considered as a special terminal device, a function of constructing a virtual local area network based on an attribute of the first APP instance or an attribute of the terminal device may be added to the UDM. For related description, refer to the embodiment shown in FIG. 13A to FIG. 13C. Details are not described herein again.

Further, after the procedure for establishing the session for the terminal device and the procedure for establishing the session for the first APP instance are completed, a self-organizing network that can implement plug-and-play of an application service can be formed between the terminal device and the first APP instance, to implement mutual data access between the terminal device and the application server in which the first APP instance is located. The following is separately described by using an example in which the terminal device sends second data to the application server in which the first APP instance is located and an example in which the application server in which the first APP instance is located sends first data to the terminal device.

For example, a virtual local area network can be constructed for the first APP instance and the terminal device, and the terminal device sends the second data to the application server in which the first APP instance is located. In this case, the method for an application to access a network includes the following steps.

S1413 to S1415 are the same as steps S1311 to S1313 in the embodiment shown in FIG. 13A to FIG. 13C, and details are not described herein again.

S1416: The first anchor UPF sends, by using the path between the first anchor UPF and the AUEF, the second data to the APP integration platform on which the AUEF is located. Correspondingly, the APP integration platform on which the AUEF is located receives the second data from the first anchor UPF.

In this embodiment of this application, when sending, by using the path between the first anchor UPF and the AUEF, the second data to the APP integration platform on which the AUEF is located, the first anchor UPF may encapsulate the second data by using the first path information and the second path information. For details, refer to an existing data transmission manner. Details are not described herein.

S1417: The APP integration platform on which the AUEF is located sends the second data to the application server in which the first APP instance is located. Correspondingly, the application server in which the first APP instance is located receives the second data from the APP integration platform on which the AUEF is located.

It should be noted that the foregoing steps S1413 to S1417 are described by using an example in which a virtual local area network can be constructed for the first APP instance and the terminal device. In a possible implementation, in this embodiment of this application, the second data may not be transmitted through the N19 tunnel between the first anchor UPF and the second anchor UPF. For example, when in the procedure for establishing the session for the first APP instance, the application server in which the first APP instance is located advertises a route based on the first address allocated by the SMF or the first anchor UPF to the session of the first APP instance, in this embodiment of this application, after receiving the second data, the second anchor UPF may directly find the application server through addressing in an existing routing manner based on the first address advertised by the application server in which the first APP instance is located, so that the second anchor UPF can forward the second data to the application server. This is not specifically limited in this embodiment of this application. Alternatively, for example, in this embodiment of this application, when in the procedure for establishing the session for the first APP instance, the first anchor UPF supports routing policy advertisement for the first APP instance in the 5G network, in this embodiment of this application, after receiving the second data, the second anchor UPF may directly find the first anchor UPF through addressing in an existing routing manner based on a routing policy advertised by the first anchor UPF to the outside, so that the second anchor UPF sends the second data to the first anchor UPF. After receiving the second data, the first anchor UPF sends, by using the APP integration platform on which the AUEF is located, the second data to the application server in which the first APP instance is located. This is not specifically limited in this embodiment of this application.

For example, a virtual local area network can be constructed for the first APP instance and the terminal device, and the application server in which the first APP instance is located sends the first data to the terminal device. In this case, the method for an application to access a network includes the following steps.

S1418: The application server in which the first APP instance is located sends the first data to the APP integration platform on which the AUEF is located. Correspondingly, the APP integration platform on which the AUEF is located receives the first data from the application server in which the first APP instance is located, where the first data includes a source address and a destination address, the source address is the first address allocated by a core network to the session of the first APP instance in the procedure for establishing the session for the first APP instance, and the destination address is a second address allocated by the core network to the session of the terminal device in the procedure for establishing the session for the terminal device.

S1419: The APP integration platform on which the AUEF is located sends the first data to the first anchor UPF by using the path between the first anchor UPF and the AUEF. Correspondingly, the first anchor UPF receives the first data from the APP integration platform on which the AUEF is located.

In this embodiment of this application, when sending the first data to the first anchor UPF by using the path between the first anchor UPF and the AUEF, the APP integration platform on which the AUEF is located may encapsulate the first data by using the first path information and the second path information. For details, refer to an existing data transmission manner. Details are not described herein.

S1420 to S1422 are the same as steps S1316 to S1318 in the embodiment shown in FIG. 13A to FIG. 13C, and details are not described herein again.

It should be noted that the foregoing steps S1418 to S1422 are described by using an example in which a virtual local area network can be constructed for the first APP instance and the terminal device. In a possible implementation, in this embodiment of this application, the first data may not be transmitted through the N19 tunnel between the first anchor UPF and the second anchor UPF. For example, when in the procedure for establishing the session for the terminal device, the second anchor UPF advertises a route based on the second address allocated by the SMF or the second anchor UPF to the session of the terminal device, in this embodiment of this application, the application server in which the first APP instance is located may directly find the second anchor UPF through addressing in an existing routing manner based on the second address advertised by the second anchor UPF, so that the second anchor UPF can forward the first data to the terminal device. This is not specifically limited in this embodiment of this application.

In this embodiment of this application, the SMF and the first anchor UPF in the mobile communication network establish the session for the first APP instance, and allocate the first address to the session of the first APP instance in the session establishment process. It can be learned that address allocation and management and a data plane forwarding path that correspond to the first application instance all fall within a control range of the mobile communication network. In other words, in this solution, the first APP instance may access the 5G network as a special terminal device. Because the first APP instance is a specific running instance of an application, based on this solution, flexibility of data exchange between the application and the mobile communication network can be improved. Further, based on this solution, an application may be incorporated into mobile communication network planning to implement plug-and-play of the application in a mobile communication system, to dynamically orchestrate an application service and find an optimal path. This helps implement a new business deployment and cooperation mode between an operator and an application service provider.

The processor 1101 in the communication apparatus 1100 shown in FIG. 11 may invoke the application program code stored in the memory 1103, to indicate the SMF, the APP integration platform, or the first anchor UPF to perform actions of the SMF, the APP integration platform, or the first anchor UPF in steps S1400 to S1422. This is not limited in this embodiment.

It can be understood that in the embodiments shown in FIG. 12 to FIG. 14C, the method and/or the step implemented by the first user plane function entity may alternatively be implemented by a component that can be used in the first user plane function entity, the method and/or the step implemented by the application instance access module may alternatively be implemented by a component (for example, a chip or a circuit) that can be used in the application instance access module, and the method and/or the step implemented by the session management function entity may alternatively be implemented by a component (for example, a chip or a circuit) that can be used in the session management function entity.

The foregoing mainly describes the solutions provided in embodiments of this application from a perspective of interaction between network elements. Correspondingly, an embodiment of this application further provides a communication apparatus. The communication apparatus may be the session management function entity in the foregoing method embodiments, an apparatus including the session management function entity, or a component that can be used in the session management function entity. It can be understood that to implement the foregoing functions, the communication apparatus includes a corresponding hardware structure and/or software module for performing each function. A person skilled in the art should easily be aware that, the units and the algorithm steps in the examples described with reference to embodiments disclosed in this specification can be implemented in this application in a form of hardware or a combination of hardware and computer software. Whether a function is performed by hardware or by driving hardware by using computer software depends on particular applications and design constraints of the technical solutions. A skilled person may use different methods for particular applications to implement the described functions, but this implementation should not be considered as beyond the scope of this application.

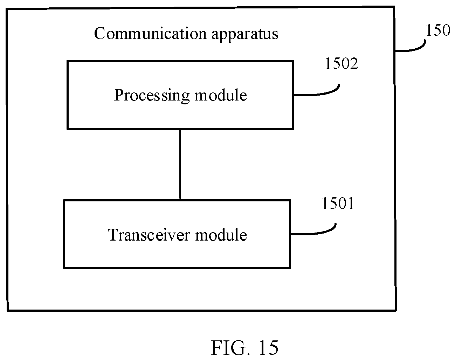

FIG. 15 is a schematic diagram of a structure of a communication apparatus 150. The communication apparatus 150 includes a processing module 1502 and a transceiver module 1501. The transceiver module 1501 may also be referred to as a transceiver unit, and is configured to implement a transceiver function. For example, the transceiver module 1501 may be a transceiver circuit, a transceiver machine, a transceiver, or a communication interface.

For example, the communication apparatus 150 is the session management network element in the foregoing method embodiments, or a chip or another component disposed in the session management network element.

The transceiver module 1501 is configured to receive a first message from an application instance access module, where the first message includes identification information of a first application instance, and the first message is used to request to establish a first connection for the first application instance. The processing module 1502 is configured to determine a first user plane function entity serving the first application instance. The transceiver module 1501 is further configured to send a second message to the first user plane function entity, where the second message includes the identification information of the first application instance, and the second message is used to request to establish the first connection for the first application instance. The transceiver module 1501 is further configured to receive a third message from the first user plane function entity, where the third message includes an establishment result of the first connection, and the establishment result includes a success. The transceiver module 1501 is further configured to send a fourth message to the application instance access module, where the fourth message includes a first address allocated by a core network element to the first connection.

In a possible implementation, the first message and the second message further include first path information allocated by the application instance access module to the first connection, and the third message and the fourth message further include second path information allocated by the first user plane function entity to the first connection. The first path information and the second path information are used to establish a first path that is in the first connection and that is between the first user plane function entity and the application instance access module.

In a possible implementation, the core network element is the first user plane function entity, and the third message further includes the first address.

In a possible implementation, the core network element is the session management function entity.

In a possible implementation, the second message further includes the first address, and the first address is used by the first user plane function entity to advertise a route.

In a possible implementation, the first message further includes a first parameter, and the first parameter is used to determine the first user plane function entity serving the first application instance, or the first parameter is used to construct a virtual local area network including the first user plane function entity.

In a possible implementation, the first parameter includes at least one of the following parameters: location information and an SSC mode that are of the first application instance, a DNN corresponding to the first connection, or identification information of a network slice in which the first connection is located.

In a possible implementation, the first message further includes application information corresponding to the first application instance, and the application information is used to construct a virtual local area network including the first user plane function entity.

In a possible implementation, the transceiver module 1501 is further configured to send a fifth message to a unified data management function entity, where the fifth message includes the identification information of the first application instance, and the fifth message is used to request to obtain subscription data of the first application instance. The transceiver module 1501 is further configured to receive the subscription data from the unified data management function entity, where the subscription data is used to determine the first user plane function entity serving the first application instance, or the subscription data is used to construct a virtual local area network including the first user plane function entity.

In a possible implementation, the transceiver module 1501 is further configured to register, with a network repository function entity, a function in which the communication apparatus 150 supports establishment of a connection for an application instance.

For example, the communication apparatus 150 is the application instance access module in the foregoing method embodiments, or a chip or another component disposed in the application instance access module.

The processing module 1502 is configured to determine a session management function entity serving a first application instance. The transceiver module 1501 is configured to send a first message to the session management function entity, where the first message includes identification information of the first application instance, and the first message is used to request to establish a first connection for the first application instance. The transceiver module 1501 is further configured to receive a fourth message from the session management function entity, where the fourth message includes a first address allocated by a core network element to the first connection.

In a possible implementation, the first message further includes first path information allocated by the communication apparatus to the first connection, and the fourth message further includes second path information allocated by a first user plane function entity to the first connection. The first path information and the second path information are used to establish a first path that is in the first connection and that is between the first user plane function entity and the application instance access module, and the first user plane function entity is a user plane function entity serving the first application instance.

In a possible implementation, the transceiver module 1501 is further configured to: after obtaining first data from the first application instance, send the first data to the first user plane function entity by using the first path; or the transceiver module 1501 is further configured to receive second data from the first user plane function entity by using the first path.

In a possible implementation, the processing module 1502 is further configured to advertise a route based on the first address.

In a possible implementation, the transceiver module 1501 is further configured to receive second data from a second user plane function entity, where the second user plane function entity finds the application instance access module through addressing based on the route advertised by the application instance access module.

In a possible implementation, the transceiver module 1501 is further configured to receive a sixth message from the first application instance before sending the first message to the session management function entity, where the sixth message includes application information corresponding to the first application instance, and the sixth message is used to request to register with the application instance access module. The transceiver module 1501 is further configured to send the first address to the first application instance after receiving the fourth message from the session management function entity.

In a possible implementation, the core network element is the session management function entity, or the core network element is the first user plane function entity serving the first application instance.

In a possible implementation, the first message further includes a first parameter, and the first parameter is used to determine the first user plane function entity serving the first application instance, or the first parameter is used to construct a virtual local area network including the first user plane function entity.

In a possible implementation, the first parameter includes at least one of the following parameters: location information and an SSC mode that are of the first application instance, a DNN corresponding to the first connection, or identification information of a network slice in which the first connection is located.

In a possible implementation, the first message further includes the application information corresponding to the first application instance, the application information is used to construct a virtual local area network including the first user plane function entity, and the first user plane function entity is a user plane function entity serving the first application instance.

In a possible implementation, that the processing module 1502 is configured to determine a session management function entity serving a first application instance includes: The processing module 1502 is configured to obtain, from a network repository function entity, information about one or more session management function entities that support establishment of a connection for an application instance; and determine, based on the information about the one or more session management function entities, the session management function entity serving the first application instance.

For example, the communication apparatus 150 is the first user plane function entity in the foregoing method embodiments, or a chip or another component disposed in the first user plane function entity.

The transceiver module 1501 is configured to receive a second message from a session management function entity, where the second message includes identification information of a first application instance, and the second message is used to request to establish a first connection for the first application instance. The transceiver module 1501 is further configured to send a third message to the session management function entity, where the third message includes an establishment result of the first connection, and the establishment result includes a success or a failure.

In a possible implementation, the second message further includes first path information allocated by an application instance access module to the first connection, and the third message further includes second path information allocated by the communication apparatus to the first connection. The first path information and the second path information are used to establish a first path that is in the first connection and that is between the first user plane function entity and the application instance access module.

In a possible implementation, the third message further includes a first address allocated by the communication apparatus to the first connection.

In a possible implementation, the second message further includes a first address allocated by the session management function entity to the first connection.

In a possible implementation, the processing module 1502 is configured to advertise a route based on the first address.

In a possible implementation, the transceiver module 1501 is further configured to register, with a network repository function entity, a function in which the communication apparatus 150 supports establishment of a connection for an application instance.

In a possible implementation, the transceiver module 1501 is further configured to receive first data from the first application instance by using the application instance access module. The transceiver module 1501 is further configured to send the first data to a second user plane function entity, where the second user plane function entity is a user plane function entity serving a terminal device.

In a possible implementation, the transceiver module 1501 is further configured to receive second data from a second user plane function entity, where the second user plane function entity is a user plane function entity serving a terminal device. The transceiver module 1501 is further configured to send the second data to the first application instance by using the application instance access module. In a possible implementation, the second user plane function entity finds the first user plane function entity through addressing based on the route advertised by the first user plane function entity.

All related content of the steps in the foregoing method embodiments may be cited in function descriptions of corresponding functional modules. Details are not described herein again.

In this embodiment, the communication apparatus 150 is presented in a form in which functional modules are obtained through division in an integrated manner. The "module" herein may be a specific ASIC, a circuit, a processor and a memory that execute one or more software or firmware programs, an integrated logic circuit, and/or another component capable of providing the foregoing functions. In a simple embodiment, a person skilled in the art may figure out that the communication apparatus 150 may be in a form of the communication apparatus 1100 shown in FIG. 11.

For example, the processor 1101 in the communication apparatus 1100 shown in FIG. 11 may invoke the computer-executable instructions stored in the memory 1103, so that the communication apparatus 1100 performs the methods for an application to access a network in the foregoing method embodiments.

Specifically, functions/implementation processes of the transceiver module 1501 and the processing module 1502 in FIG. 15 may be implemented by invoking, by the processor 1101 in the communication apparatus 1100 shown in FIG. 11, the computer-executable instructions stored in the memory 1103. Alternatively, a function/an implementation process of the processing module 1502 in FIG. 15 may be implemented by invoking, by the processor 1101 in the communication apparatus 1100 shown in FIG. 11, the computer-executable instructions stored in the memory 1103, and a function/an implementation process of the transceiver module 1501 in FIG. 15 may be implemented by using the communication interface 1104 in the communication apparatus 1100 shown in FIG. 11.

The communication apparatus 150 provided in this embodiment can perform the foregoing method for an application to access a network. Therefore, for technical effects that can be obtained by the communication apparatus 150, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system-on-a-chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing module or unit is implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware can run necessary software or perform the foregoing method procedure without depending on software.

In a possible implementation, an embodiment of this application further provides a communication apparatus (for example, the communication apparatus may be a chip or a chip system). The communication apparatus includes a processor, configured to implement the method in any one of the foregoing method embodiments. In a possible implementation, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include the memory. When the communication apparatus is a chip system, the communication apparatus may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or include one or more data storage devices such as a server and a data center that can be integrated with a medium. The available medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described herein with reference to the embodiments, in a process of implementing this application that claims protection, a person skilled in the art may understand and implement other variations of the disclosed embodiments by viewing the accompanying drawings, disclosed content, and appended claims. In the claims, the word "comprising" (comprising) does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations can be made to this application without departing from the spirit and scope of this application. Correspondingly, this specification and accompanying drawings are merely example descriptions of this application defined by the appended claims, and are considered as covering any or all of modifications, variations, combinations, or equivalents falling within the scope of this application. It is clear that a person skilled in the art can make various modifications and variations to this application without departing from the spirit and scope of this application. This application is intended to include these modifications and variations made to this application provided that they fall within the scope of the claims of this application and an equivalent technology thereof.

## Claims

1. A method for an application to access a network, wherein the method comprises:
receiving, by a session management function entity, a first message from an application instance access module, wherein the first message comprises identification information of a first application instance, and the first message is used to request to establish a first connection for the first application instance;
determining, by the session management function entity, a first user plane function entity serving the first application instance;
sending, by the session management function entity, a second message to the first user plane function entity, wherein the second message comprises the identification information of the first application instance, and the second message is used to request to establish the first connection for the first application instance;
receiving, by the session management function entity, a third message from the first user plane function entity, wherein the third message comprises an establishment result of the first connection, and the establishment result comprises a success; and
sending, by the session management function entity, a fourth message to the application instance access module, wherein the fourth message comprises a first address allocated by a core network element to the first connection.

2. The method according to claim 1, wherein the first message and the second message further comprise first path information allocated by the application instance access module to the first connection, and the third message and the fourth message further comprise second path information allocated by the first user plane function entity to the first connection, wherein the first path information and the second path information are used to establish a first path that is in the first connection and that is between the first user plane function entity and the application instance access module.

3. The method according to claim 1 or 2, wherein the core network element is the first user plane function entity, and the third message further comprises the first address.

4. The method according to claim 1 or 2, wherein the core network element is the session management function entity.

5. The method according to claim 4, wherein the second message further comprises the first address, and the first address is used by the first user plane function entity to advertise a route.

6. The method according to any one of claims 1 to 5, wherein the first message further comprises a first parameter, and the first parameter is used to determine the first user plane function entity serving the first application instance, or the first parameter is used to construct a virtual local area network comprising the first user plane function entity.

7. The method according to claim 6, wherein the first parameter comprises at least one of the following parameters:
location information and a session and service continuity SSC mode that are of the first application instance, a data network name DNN corresponding to the first connection, or identification information of a network slice in which the first connection is located.

8. The method according to any one of claims 1 to 7, wherein the first message further comprises application information corresponding to the first application instance, and the application information is used to construct a virtual local area network comprising the first user plane function entity.

9. The method according to any one of claims 1 to 8, wherein the method further comprises:
sending, by the session management function entity, a fifth message to a unified data management function entity, wherein the fifth message comprises the identification information of the first application instance, and the fifth message is used to request to obtain subscription data of the first application instance; and
receiving, by the session management function entity, the subscription data from the unified data management function entity, wherein the subscription data is used to determine the first user plane function entity serving the first application instance, or the subscription data is used to construct a virtual local area network comprising the first user plane function entity.

10. The method according to any one of claims 1 to 9, wherein the method further comprises:
registering, by the session management function entity with a network repository function entity, a function in which the session management function entity supports establishment of a connection for an application instance.

11. A communication apparatus, wherein the communication apparatus is a session management function entity or a module applied to the session management function entity, and the communication apparatus comprises a transceiver module and a processing module;
the transceiver module is configured to receive a first message from an application instance access module, wherein the first message comprises identification information of a first application instance, and the first message is used to request to establish a first connection for the first application instance;
the processing module is configured to determine a first user plane function entity serving the first application instance;
the transceiver module is further configured to send a second message to the first user plane function entity, wherein the second message comprises the identification information of the first application instance, and the second message is used to request to establish the first connection for the first application instance;
the transceiver module is further configured to receive a third message from the first user plane function entity, wherein the third message comprises an establishment result of the first connection, and the establishment result comprises a success; and
the transceiver module is further configured to send a fourth message to the application instance access module, wherein the fourth message comprises a first address allocated by a core network element to the first connection.

12. The communication apparatus according to claim 11, wherein the first message and the second message further comprise first path information allocated by the application instance access module to the first connection, and the third message and the fourth message further comprise second path information allocated by the first user plane function entity to the first connection, wherein the first path information and the second path information are used to establish a first path that is in the first connection and that is between the first user plane function entity and the application instance access module.

13. The communication apparatus according to claim 11 or 12, wherein the core network element is the first user plane function entity, and the third message further comprises the first address.

14. The communication apparatus according to claim 11 or 12, wherein the core network element is the session management function entity.

15. The communication apparatus according to claim 14, wherein the second message further comprises the first address, and the first address is used by the first user plane function entity to advertise a route.

16. The communication apparatus according to any one of claims 11 to 15, wherein the first message further comprises a first parameter, and the first parameter is used to determine the first user plane function entity serving the first application instance, or the first parameter is used to construct a virtual local area network comprising the first user plane function entity.

17. The communication apparatus according to claim 16, wherein the first parameter comprises at least one of the following parameters:
location information and a session and service continuity SSC mode that are of the first application instance, a data network name DNN corresponding to the first connection, or identification information of a network slice in which the first connection is located.

18. The communication apparatus according to any one of claims 11 to 17, wherein the first message further comprises application information corresponding to the first application instance, and the application information is used to construct a virtual local area network comprising the first user plane function entity.

19. The communication apparatus according to any one of claims 11 to 18, wherein
the transceiver module is further configured to send a fifth message to a unified data management function entity, wherein the fifth message comprises the identification information of the first application instance, and the fifth message is used to request to obtain subscription data of the first application instance; and
the transceiver module is further configured to receive the subscription data from the unified data management function entity, wherein the subscription data is used to determine the first user plane function entity serving the first application instance, or the subscription data is used to construct a virtual local area network comprising the first user plane function entity.

20. The communication apparatus according to any one of claims 11 to 19, wherein
the transceiver module is further configured to register, with a network repository function entity, a function in which the communication apparatus supports establishment of a connection for an application instance.

21. A communication apparatus, comprising at least one processor, wherein
the processor is configured to be coupled to a memory, read computer instructions stored in the memory, and then perform the method according to any one of claims 1 to 10 based on the computer instructions.

22. The communication apparatus according to claim 21, wherein the communication apparatus further comprises a communication interface; and
the communication interface is configured to communicate with another communication apparatus.

23. The communication apparatus according to claim 21 or 22, wherein the communication apparatus further comprises a memory; and
the memory is configured to store the computer instructions.

24. The communication apparatus according to claim 21 or 22, wherein the communication apparatus is a chip or a chip system.

25. A computer-readable storage medium, wherein the computer-readable storage medium stores a computer program, and when the computer program is executed by a computer, the computer is enabled to perform the method according to any one of claims 1 to 10.

26. A computer program product, comprising instructions, wherein when the computer program product is run on a computer, the computer is enabled to perform the method according to any one of claims 1 to 10.

27. A communication system, wherein the communication system comprises a session management function entity and a first user plane function entity;
the session management function entity is configured to receive a first message from an application instance access module, wherein the first message comprises identification information of a first application instance, and the first message is used to request to establish a first connection for the first application instance;
the session management function entity is further configured to send a second message to the first user plane function entity, wherein the second message comprises the identification information of the first application instance, and the second message is used to request to establish the first connection for the first application instance;
the first user plane function entity is configured to receive the second message from the session management function entity, and send a third message to the session management function entity, wherein the third message comprises an establishment result of the first connection, and the establishment result comprises a success; and
the session management function entity is further configured to send a fourth message to the application instance access module, wherein the fourth message comprises a first address allocated by a core network element to the first connection.

28. The communication system according to claim 27, wherein the communication system further comprises the application instance access module;
the application instance access module is configured to send the first message to the session management function entity; and
the application instance access module is further configured to receive the fourth message from the session management function entity.
